(19)

**Europäisches Patentamt**
**European Patent Office**
**Office européen des brevets**

(11) **EP 4 258 171 A1**

(12) **EUROPEAN PATENT APPLICATION**

(43) Date of publication:
**11.10.2023 Bulletin 2023/41**

(21) Application number: **22217114.2**

(22) Date of filing: **29.12.2022**

(51) International Patent Classification (IPC):
**G06N 3/044** (2023.01)    **G06N 5/01** (2023.01)

(52) Cooperative Patent Classification (CPC):
**G06N 3/044; G06N 5/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 JP 2022057999**

(71) Applicant: **FUJITSU LIMITED**
**Kawasaki-shi, Kanagawa 211-8588 (JP)**

(72) Inventors:
• **Watanabe, Yasuhiro**
  **Kawasaki-shi, Kanagawa, 211-8588 (JP)**
• **Tamura, Hirotaka**
  **Yokohama-shi, Kanagawa, 223-0066 (JP)**

(74) Representative: **Hoffmann Eitle**
**Patent- und Rechtsanwälte PartmbB**
**Arabellastraße 30**
**81925 München (DE)**

(54) **DATA PROCESSING APPARATUS, PROGRAM, AND DATA PROCESSING METHOD**

(57)     A data processing apparatus configured to: search for a combination of values of a plurality of state variables that minimizes or maximizes a value of an Ising-type evaluation function that includes the plurality of state variables, repeat determining whether to permit a change in a value of a first state variable among the plurality of state variables based on the first local field, and when the change in the value of the first state variable is permitted, updating the first local field based on the first weight value, updating the second local field that corresponds to a constraint condition in which the second weight value with the first state variable is non-zero based on the second weight value, and updating the first local field based on the second local field before the updating and the second local field after the updating.

FIG. 1

EP 4 258 171 A1

**Description**

FIELD

The embodiments discussed herein are related to a data processing apparatus, a program, and a data processing method.

BACKGROUND

There is an Ising device (also called a Boltzmann machine) that uses an Ising-type evaluation function (also called an energy function or the like) as a device that calculates a large-scale discrete optimization problem which Neumann computers are not good at.

The Ising device transforms the discrete optimization problem into an Ising model that represents spin behavior of a magnetic material. Then, the Ising device searches for a state of the Ising model where a value (corresponding to energy) of the Ising-type evaluation function is minimized by a Markov chain Monte Carlo method such as a simulated annealing method, a replica exchange method (also called a parallel tempering method), or the like. The state where a minimum value of local minimum values of the evaluation function is reached is to be an optimum solution. Note that the Ising device may search for a state where the value of the evaluation function is maximized by changing a sign of the evaluation function. A state of the Ising model may be represented by a combination of values of a plurality of state variables. As a value of each of the state variables, 0 or 1 may be used.

The Ising-type evaluation function is defined by, for example, a function in a quadratic form such as the following Expression (1).

[Expression 1]

$$E(x) = -\sum_{i=1}^{N}\sum_{j>i}^{N} W_{ij}x_i x_j - \sum_{i=1}^{N} b_i x_i \qquad (1)$$

A first term on a right side is obtained by integrating products of values (0 or 1) of two state variables and a weight value (representing strength of correlation between the two state variables) for all combinations of N state variables of the Ising model with neither an omission nor an overlap. A state variable with an identification number i is represented by $x_i$, a state variable with an identification number j is represented by $x_j$, and a weight value indicating magnitude of correlation between the state variables with the identification numbers i and j is represented by $W_{ij}$. A second term on the right side is obtained by summing up products of a bias coefficient and a state variable for each identification number. A bias coefficient for the identification number i is represented by $b_i$.

Furthermore, an energy change amount ($\Delta E_i$) associated with a change in the value of $x_i$ is represented by the following Expression (2).

[Expression 2]

$$\Delta E_i = -\Delta x_i \left( \sum_{j}^{N} W_{ij}x_j + b_i \right) = -\Delta x_i h_i \qquad (2)$$

In Expression (2), when $x_i$ changes from 1 to 0, $\Delta x_i$ becomes -1, and when the state variable $x_i$ changes from 0 to 1, $\Delta x_i$ becomes 1. Note that $h_i$ is called a local field, and $\Delta E_i$ is obtained by multiplying $h_i$ by a sign (+1 or -1) according to $\Delta x_i$. Thus, $h_i$ may also be said to be a variable that represents the energy change amount, or a variable that determines the energy change amount.

Then, for example, processing of updating the value of $x_i$ with an acceptance probability that may be represented as $\exp(-\beta\Delta E_i)$ ($\beta$ is a reciprocal of a parameter representing temperature) to generate a state transition, and also updating the local field is repeated.

Incidentally, some discrete optimization problems have a constraint condition that needs to be satisfied by a solution. For example, a knapsack problem, which is one of the discrete optimization problems, has a constraint condition that a total capacity of luggage that may be packed in a knapsack is equal to or smaller than a capacity of the knapsack. Such a constraint condition is called an inequality constraint, and may be represented by a constraint term having a value depending on whether or not the constraint condition is violated. The constraint conditions include not only the inequality constraint but also an equality constraint, an absolute value constraint, and the like.

Total energy (H(x)) including the constraint term may be represented by the following Expression (3).

[Expression 3]

$$H(x) = -\frac{1}{2}\sum_{i \in D}\sum_{j \in D} W_{ij}x_i x_j - \sum_{i \in D} b_i x_i + \sum_{k \in A} \lambda_k g(h_k) \qquad (3)$$

In Expression (3), the sum of a first term and a second term on a right side represents energy corresponding to E(x) in Expression (1), and a third term on the right side represents overall magnitude (energy) of the constraint term. Furthermore, D represents a set of identification numbers of the state variables, k represents an identification number of the constraint term, and A represents a set of identification numbers of the constraint terms. Furthermore, $\lambda_k$ is a predetermined positive coefficient for the constraint term with the identification number k.

In a case where the constraint condition is the inequality constraint, $g(h_k)$ in Expression (3) may be represented by the following Expression (4).

[Expression 4]

$$g(h_k) = max[0, h_k], h_k = R_k - U_k = \sum_{i \in D} W_{ki}x_i - U_k \qquad (4)$$

In Expression (4), $max[0, h_k]$ is a function that outputs the larger value of 0 and $h_k$. Furthermore, $R_k$ represents a consumption amount (also called resource amount) of the constraint term with the identification number k, and $U_k$ represents an upper limit of the resource amount. $W_{ki}$ is a coefficient (weight value) indicating a weight of $x_i$ in the inequality constraint with the identification number k.

In Expression (3), an energy change amount ($\Delta H_j$) associated with a change in the value of $x_j$ is represented by the following Expression (5).

[Expression 5]

$$\Delta H_j = -h_j \Delta x_j + \sum_{k \in A} \lambda_k(g(h_k + W_{kj}\Delta x_j) - g(h_k)) \qquad (5)$$

In the case where the constraint condition is the inequality constraint, the energy change amount ($\Delta H_j$) associated with the change in the value of $x_j$ may be represented by the following Expression (6) instead of Expression (5).

[Expression 6]

$$\Delta H_j = - h_j \Delta x_j$$
$$+ \sum_{i=1}^{M} \lambda_i(max[0, h_i + a_{ij}\Delta x_j - C_{ui}] - max[0, h_i - C_{ui}]) \qquad (6)$$

In Expression (6), $a_{ij}$ is a coefficient indicating a weight of $x_j$ in the inequality constraint with the identification number i, and corresponds to $W_{ki}$ described above. $C_{ui}$ is an upper limit value in the inequality constraint with the identification number i, and corresponds to $U_k$ described above. M represents the number of constraint terms.

The acceptance probability of accepting a change in the value of $x_j$ may be represented as $A_j = min[1, exp(-\beta\Delta H_j)]$. A function that outputs the smaller value of 1 and $exp(-\beta\Delta H_j)$ is represented by $min[1, exp(-\beta\Delta H_j)]$.

Expression (3) is not a function in a quadratic form like Expression (1), but a discontinuous function in a linear form. Since before, there has been proposed a technology for transforming a discontinuous function in a linear form into a quadratic form so that an Ising device may handle an inequality constraint. However, in the case of calculating a discrete optimization problem by using a constraint term of the inequality constraint transformed into the quadratic form, it is sometimes difficult to solve the problem with the Ising device because processing becomes complicated, for example.

Thus, since before, there has been proposed a technology for solving a problem with an Ising device by using the constraint term of the inequality constraint as described above as it is in the linear form.

Japanese Laid-open Patent Publication No. 2020-201598 and Japanese Laid-open Patent Publication No. 2020-204928 are disclosed as related art.

SUMMARY

[TECHNICAL PROBLEM]

In the known technology for solving a problem by using the constraint term of the inequality constraint as it is in the linear form, calculation using all coefficients related to each constraint term ($a_{ij}$ in the example of Expression (6) described above) is performed when calculation of $\Delta H_j$ associated with a change in a value of a state variable is performed.

There may be equal to or greater than 1000 coefficients related to each constraint term. In the known technology, when the calculation of $\Delta H_j$ is performed, all the coefficients are read from a memory to perform addition processing. Thus, a calculation amount may become large.

In one aspect, an embodiment aims to provide a data processing apparatus, a program, and a data processing method capable of reducing a calculation amount of a discrete optimization problem with a constraint condition.

[SOLUTION TO PROBLEM]

According to an aspect of the embodiments, a data processing apparatus that searches for a combination of values of a plurality of state variables that minimizes or maximizes a value of an Ising-type evaluation function that includes the plurality of state variables, the data processing apparatus comprising: a storage unit that stores total energy that is a sum of a plurality of constraint terms and the value of the evaluation function, the values of the plurality of state variables, a first weight value between each of the plurality of state variables, a second weight value between one of the plurality of state variables and each of a plurality of constraint conditions, a first local field, and a second local field, the plurality of constraint terms including values that correspond to whether each of the plurality of constraint conditions is violated, the first local field indicating a first change amount of the total energy when a value of each of the plurality of state variables changes, the second local field being used to specify a constraint violation amount for each of the plurality of the constraint conditions; and a processing unit that repeats determining whether to permit a change in a value of a first state variable among the plurality of state variables based on the first local field, and when the change in the value of the first state variable is permitted, updating the first local field based on the first weight value, updating the second local field that corresponds to a constraint condition in which the second weight value with the first state variable is non-zero based on the second weight value, and updating the first local field based on the second local field before the updating and the second local field after the updating.

[ADVANTAGEOUS EFFECTS OF INVENTION]

In one aspect, an embodiment may reduce a calculation amount of a discrete optimization problem with a constraint condition.

BRIEF DESCRIPTION OF DRAWINGS

FIG. 1 is a diagram illustrating an example of a data processing apparatus and a data processing method of a first embodiment;
FIG. 2 is a diagram illustrating an example of a change amount of a value of a penalty function due to a change in a value of a state variable;
FIG. 3 is a diagram illustrating an example of updating local fields in a case where a value of $x_j$ changes;
FIG. 4 is a diagram illustrating a procedure of an example of updating the local fields;
FIG. 5 is a diagram illustrating a data processing apparatus of a first comparative example;
FIG. 6 is a diagram illustrating a data processing apparatus of a second comparative example;
FIG. 7 is a diagram illustrating an example of updating local fields in a case where a value of $x_k$ changes in the second comparative example and an example of updating the local fields in a case where a value of $h_k$ changes in the first embodiment;
FIG. 8 is a diagram illustrating examples of occurrence of a prediction error in the data processing apparatus of the second comparative example;

FIG. 9 is a diagram illustrating examples of the penalty function that may be used;

FIG. 10 is a diagram illustrating an example of a constraint term;

FIG. 11 is a block diagram illustrating a hardware example of a data processing apparatus of a second embodiment;

FIG. 12 is a block diagram illustrating a functional example of the data processing apparatus;

FIG. 13 is a diagram illustrating an operation example of the data processing apparatus of the second embodiment;

FIG. 14 is a diagram illustrating a circuit example of an $h_k$ contribution amount calculation unit;

FIG. 15 is a diagram illustrating a first calculation example of $\Delta g$;

FIG. 16 is a diagram illustrating a second calculation example of $\Delta g$;

FIG. 17 is a diagram illustrating an example of $\Delta g$ generation circuits that generate $\Delta g$ by combining a plurality of the penalty functions;

FIG. 18 is a flowchart illustrating a flow of an example of the data processing method;

FIG. 19 is a flowchart illustrating a flow of an example of local field update processing; and

FIG. 20 is a diagram illustrating another example of the data processing apparatus.

## DESCRIPTION OF EMBODIMENTS

Hereinafter, modes for carrying out embodiments will be described with reference to the drawings.

(First Embodiment)

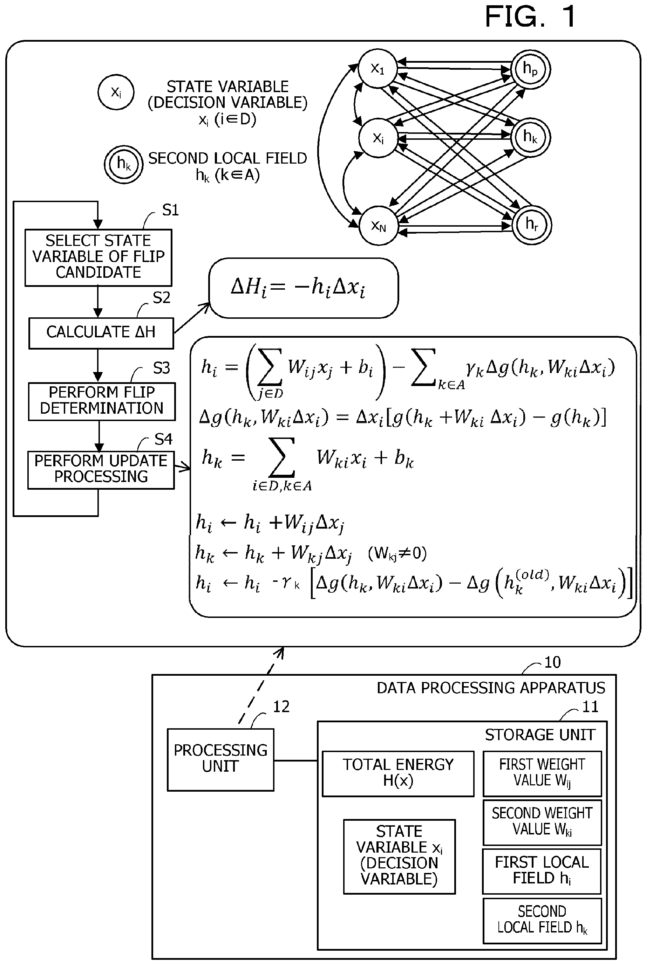

FIG. 1 is a diagram illustrating an example of a data processing apparatus and a data processing method of a first embodiment.

A data processing apparatus 10 of the first embodiment includes a storage unit 11 and a processing unit 12.

The storage unit 11 is, for example, a volatile storage device that is an electronic circuit such as a dynamic random access memory (DRAM), or a non-volatile storage device that is an electronic circuit such as a hard disk drive (HDD) or a flash memory. The storage unit 11 may include an electronic circuit such as a static random access memory (SRAM) register.

The storage unit 11 stores H(x), a plurality of (hereinafter N) values of state variables ($x_i$), a first weight value ($W_{ij}$ described above) between each of the N $x_i$'s, and a second weight value ($W_{ki}$) between any one of the N $x_i$'s and each of M constraint conditions. Note that the storage unit 11 does not need to store the second weight value (second weight value with a value of 0) related to a state variable that does not affect any one of the M constraint conditions.

An identification number representing any one of the N $x_i$'s is represented by i, and an identification number representing any one of the M constraint terms (or constraint conditions) is represented by k.

Moreover, the storage unit 11 stores a first local field ($h_i$) that represents a change amount ($\Delta H_i$) of H(x) in a case where each of the values of the N $x_i$'s changes, and a second local field ($h_k$) used to specify a constraint violation amount for each of the M constraint conditions. Note that the state variable may also be called a decision variable. Since each second local field corresponds to each constraint term, the second weight value may also be said to be a weight value between the state variable and the second local field.

In FIG. 1, correlation between each of a plurality of state variables ($x_1$, $x_i$, and $x_N$ in the example of FIG. 1), and correlation between each of the plurality of state variables and a plurality of second local fields ($h_p$, $h_k$, and h, in the example of FIG. 1) are indicated by arrows. Magnitude of the correlation corresponds to the first weight value or the second weight value.

H(x) stored in the storage unit 11 may be represented as H(x) = E(x) + P(x). E(x) is the sum of the first term and the second term on the right side of the Expression (3) described above.

In the following, it is assumed that total energy P(x) of the M constraint terms corresponding to the M constraint conditions is represented by Expression (7).

[Expression 7]

$$P(x) = \sum_{k \in A} \gamma_k g(h_k) \qquad (7)$$

A proportional coefficient related to a constraint term with the identification number = k is represented by $\gamma_k$, and $\gamma_k$ represents a weight of the constraint term. A different value may be used for $\gamma_k$ for each constraint term. For example, $g(h_k)$ may be a Max function as represented by Expression (4), or may be another function (for example, a step function or the like). Hereinafter, $g(h_k)$ is called a penalty function.

The second local field ($h_k$) may be represented by the following Expression (8).

[Expression 8]

$$h_k = \sum_{i \in D, k \in A} W_{ki} x_i + b_k \qquad (8)$$

In Expression (8), $b_k$ is a coefficient related to a constraint condition with the identification number = k. In a case where the constraint condition with the identification number = k is an inequality constraint, a first term on a right side of Expression (8) corresponds to $R_k$ in Expression (4) described above, and $+b_k$ corresponds to $-U_k$ in Expression (4). Thus, as described above, $h_k$ may be said to be a variable used to specify a difference between $R_k$ and $U_k$, for example, a constraint violation amount.

Note that $\Delta H_i$ in a case where a value of a certain state variable ($x_i$) changes may be represented by the following Expression (9) using the penalty function.

[Expression 9]

$$\Delta H_i = - \left( \sum_{j \in D} W_{ij} x_j + b_i \right) \Delta x_i \qquad (9)$$
$$+ \sum_{k \in A} \gamma_k (g(h_k + W_{ki} \Delta x_i) - g(h_k))$$

In Expression (9), $g(h_k + W_{ki}\Delta x_i)$ - $g(h_k)$ represents a change amount of a value of the penalty function (which may also be called a change amount of the constraint term) in a case where the value of the certain state variable ($x_i$) changes.

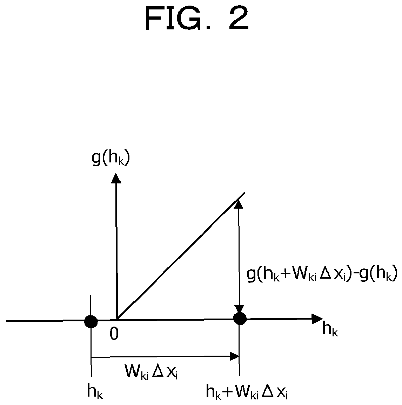

FIG. 2 is a diagram illustrating an example of the change amount of the value of the penalty function due to the change in the value of the state variable. A vertical axis represents magnitude of $g(h_k)$, and a horizontal axis represents $h_k$.

In FIG. 2, $g(h_k)$ = max[0, $h_k$] is used as an example of the penalty function. When $h_k$ changes to $h_k + W_{ki}\Delta x_i$ as the value of $x_i$ changes, the change amount of the value of the penalty function is represented as $g(h_k + W_{ki}\Delta x_i)$ - $g(h_k)$.

In the data processing apparatus 10 of the present embodiment, the first local field ($h_i$) that reflects not only a change amount of E(x) associated with the change in the value of $x_i$ but also a change amount of P(x) is used. Such $h_i$ may be represented by the following Expression (10).

[Expression 10]

$$h_i = \left( \sum_{j \in D} W_{ij} x_j + b_i \right) - \sum_{k \in A} \gamma_k \Delta g(h_k, W_{ki} \Delta x_i) \qquad (10)$$

In Expression (10), $\Delta g(h_k, W_{ki}\Delta x_i)$ is represented by the following Expression (11), and is an amount that may be calculated from $x_i$, $h_k$, and $W_{ki}$.

[Expression 11]

$$\Delta g(h_k, W_{ki} \Delta x_i) = \Delta x_i [g(h_k + W_{ki} \Delta x_i) - g(h_k)] \qquad (11)$$

By using $h_i$ as in Expression (10), $\Delta H_i$ is represented as $\Delta H_i = -h_i \Delta x_i$.

The storage unit 11 may further store a bias coefficient ($b_i$), the proportional coefficient ($\gamma_k$), and the coefficient ($b_k$) related to the constraint condition. Furthermore, the storage unit 11 may store various types of data such as calculation conditions when the processing unit 12 executes the data processing method to be described later. Furthermore, in a case where the processing unit 12 executes a part or all of processing of the data processing method to be described later by software, the storage unit 11 stores a program for executing the processing.

The processing unit 12 of FIG. 1 may be implemented by, for example, a processor that is hardware such as a central processing unit (CPU), a graphics processing unit (GPU), or a digital signal processor (DSP). Furthermore, the processing unit 12 may be implemented by an electronic circuit such as an application specific integrated circuit (ASIC) or a field programmable gate array (FPGA).

For example, the processing unit 12 searches for a state where E(x) is minimized. The state where a minimum value of local minimum values of E(x) is reached is to be an optimum solution. Note that the processing unit 12 may also search for a state where the value of E(x) is maximized by changing the signs of E(x) and P(x) (in this case, the state where the maximum value is reached is to be the optimum solution).

In FIG. 1, a flow of an example of processing by the processing unit 12 is illustrated.

Note that, here, it is assumed that values based on initial values of $x_1$ to $x_N$ are stored in the storage unit 11 as H(x), $h_i$, $h_k$, and $x_k$.

The processing unit 12 selects a state variable of a candidate (hereinafter referred to as a flip candidate) whose value is to be changed from the N state variables (Step S1). The processing unit 12 selects the state variable of the flip candidate at random or in a predetermined order, for example.

Then, the processing unit 12 calculates $\Delta H$ in a case where a value of the selected state variable changes (Step S2). For example, in a case where $x_i$ is selected, $\Delta H_i$ may be calculated by an expression $\Delta H_i = -h_i \Delta x_i$ based on $h_i$ as described above.

Next, the processing unit 12 determines whether or not to permit a change in the value of the state variable of the flip candidate (whether or not flip is permissible) based on a result of comparison between $\Delta H$ and a predetermined value (Step S3). Hereinafter, this determination processing will be referred to as flip determination processing.

The predetermined value is, for example, a noise value obtained based on a random number and a value of a temperature parameter. For example, log(rand) × T, log() is natural logarithm, which is an example of a noise value obtained based on a uniform random number (rand) equal to or greater than 0 and equal to or smaller than 1 and a temperature parameter (T), may be used as the predetermined value. In this case, in a case where $-\Delta H_i \geq$ log(rand) × T, the processing unit 12 determines that the change in the value of the state variable of the flip candidate is permitted (flip is permissible).

In a case where it is determined that flip is permissible, the processing unit 12 performs update processing (Step S4).

For example, in a case where it is determined that flip is permissible for $x_j$, the processing unit 12 updates $h_i$ by adding $\Delta h_i = W_{ij} \Delta x_j$ to the original $h_i$ for each of the N state variables. Note that, in a case where i = j, $W_{ii} = 0$ and $h_i$ does not change, so updating is unnecessary. Furthermore, in a case where it is determined that the flip is permissible for $x_j$, the processing unit 12 updates $h_k$ by adding $\Delta h_k = W_{kj} \Delta x_j$ to $h_k$ whose second weight value ($W_{kj}$) with $x_j$ is non-zero.

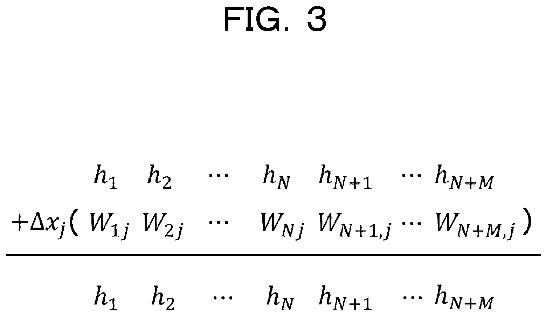

FIG. 3 is a diagram illustrating an example of updating the local fields in a case where a value of $x_j$ changes. In the example of FIG. 3, the first local field ($h_i$) is indicated by $h_1$ to $h_N$ and the second local field ($h_k$) is indicated by $h_{N+1}$ to $h_{N+M}$. Such calculation may be performed by parallel calculation with a degree of parallelism of N + M.

Moreover, the processing unit 12 further updates $h_i$ according to the following Expression (12) based on $h_k$ before and after updating.

[Expression 12]

$$h_i \leftarrow h_i - \gamma_k \left[ \Delta g(h_k, W_{ki}\Delta x_i) - \Delta g\left(h_k^{(old)}, W_{ki}\Delta x_i\right) \right] \qquad (12)$$

In Expression (12), $h_k^{(old)}$ represents $h_k$ before updating. Note that, in a case where i = j, $h_i$ does not change, so updating is unnecessary.

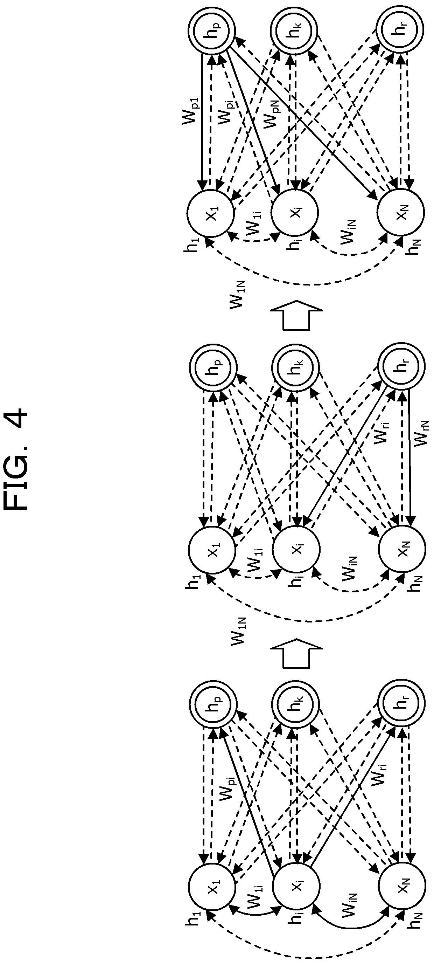

FIG. 4 is a diagram illustrating a procedure of an example of updating the local fields.

The state variables are represented by $x_1$, $x_i$, and $x_N$, and the second local fields are represented by $h_p$, $h_k$, and $h_r$.

In a case where the value of $x_i$ changes among the state variables $x_1$, $x_i$, and $x_N$, the first local field corresponding to the state variable whose first weight value with $x_i$ is non-zero, and the second local field whose second weight value with $x_i$ is non-zero are updated. For example, $h_1$ corresponding to $x_1$ whose first weight value ($W_{1i}$) with $x_i$ is non-zero is updated by adding $\Delta h_1 = W_{1i}\Delta x_i$, and $h_N$ corresponding to $x_N$ whose first weight value ($W_{iN}$) with $x_i$ is non-zero is updated by adding $\Delta h_N = W_{iN}\Delta x_i$. Furthermore, $h_p$ whose second weight value ($W_{pi}$) with $x_i$ is non-zero is updated by adding $\Delta h_p = W_{pi}\Delta x_i$, and h, whose second weight value ($W_{ri}$) with $x_i$ is non-zero is updated by adding $\Delta h_r = W_{ri}\Delta x_i$.

Next, the first local field corresponding to the state variable whose second weight value with the second local field whose value changes is non-zero is updated based on Expression (12). For example, $h_i$ and $h_N$ corresponding to $x_i$ and $x_N$, whose second weight values ($W_{ri}$ and $W_{rN}$) with h, are non-zero, are updated based on Expression (12). Moreover, $h_1$, $h_i$, and $h_N$ corresponding to $x_1$, $x_i$, and $x_N$, whose second weight values ($W_{p1}$, $W_{pi}$, and $W_{pN}$) with $h_p$ are non-zero, are updated based on Expression (12).

In the processing of Step S4, the processing unit 12 further updates H(x) by adding $\Delta H$ to the original H(x), and changes (flips) the value of the state variable (for example, $x_j$) for which it is determined that flip is permissible.

The processing unit 12 repeats the Steps S1 to S4 above.

Note that, in the description above, an example is indicated in which one state variable of the flip candidate is selected from among the N state variables, and the processing of Steps S2 to S4 is performed. However, the processing of Steps S2 and S3 may be performed in parallel for a plurality of (for example, all the N) state variables. In that case, when there is a plurality of state variables whose values are permitted to change, the processing unit 12 selects a state variable whose value is to be changed at random or according to a predetermined rule.

In a case where a simulated annealing method is performed, for example, the processing unit 12 reduces a value of the temperature parameter (T) described above according to a predetermined temperature parameter change schedule each time when flip determination processing for a state variable is repeated a predetermined number of times. Then, the processing unit 12 outputs a state obtained in a case where the flip determination processing is repeated the predetermined number of times (or in a case where a predetermined T is reached) as a calculation result of a discrete optimization problem. Note that the processing unit 12 may cause the storage unit 11 to hold total energy and a state in a case where the energy becomes the minimum until then. In that case, the processing unit 12 may output a state corresponding to the minimum energy stored after the flip determination processing is repeated the predetermined number of times as a calculation result.

In a case where the processing unit 12 performs a replica exchange method, the processing unit 12 repeats the processing of Steps S1 to S4 described above for each of a plurality of replicas to which each different T value is set. Then, the processing unit 12 exchanges the replica each time when the flip determination processing is repeated the predetermined number of times. For example, the processing unit 12 selects two replicas having adjacent T values and exchanges the values of the respective state variables and the values of the respective auxiliary variables between the selected two replicas at a predetermined exchange probability based on an energy difference or a T value difference between the replicas. Note that the T values may be exchanged between the two replicas instead of the values of the respective state variables and the values of the respective auxiliary variables. Alternatively, the processing unit 12 holds the total energy and the state in a case where the energy becomes the minimum until then. Then, the processing unit 12 outputs, as a calculation result, a state corresponding to the minimum energy in all the replicas, among the minimum energy stored after the flip determination processing described above is repeated the predetermined number of times in each replica.

By using the replica exchange method, the state changes even on a low temperature side (replica on a side where the T value is small) where the state hardly changes, and possibility of finding a good solution in a short time increases.

According to the data processing apparatus 10 and the data processing method as described above, as illustrated in FIG. 3, $h_i$ and $h_k$ may be updated with the degree of parallelism of N + M, and no update is performed for $h_k$ whose second weight value with the state variable whose value is permitted to change is 0. For example, only $h_k$ used to specify a constraint violation amount for a constraint condition affected by the change in the state variable is updated. Furthermore, for $h_k$ that is not updated, a value thereof does not change. Thus, $h_i$ is not further updated by Expression (12) using that $h_k$ (see FIG. 4 described above).

With this configuration, a calculation amount for the update processing may be reduced.

Furthermore, as the first local field ($h_i$), a value reflecting not only the change amount of E(x) associated with the change in the value of $x_i$ but also the change amount of P(x) (corresponding to $g(h_k + W_{ki}\Delta x_i) - g(h_k)$ of FIG. 2), the flip determination may be made based on more accurate $\Delta H$. Thus, a solution performance may be improved.

(Comparative Examples)

Hereinafter, data processing apparatuses of two comparative examples will be described.

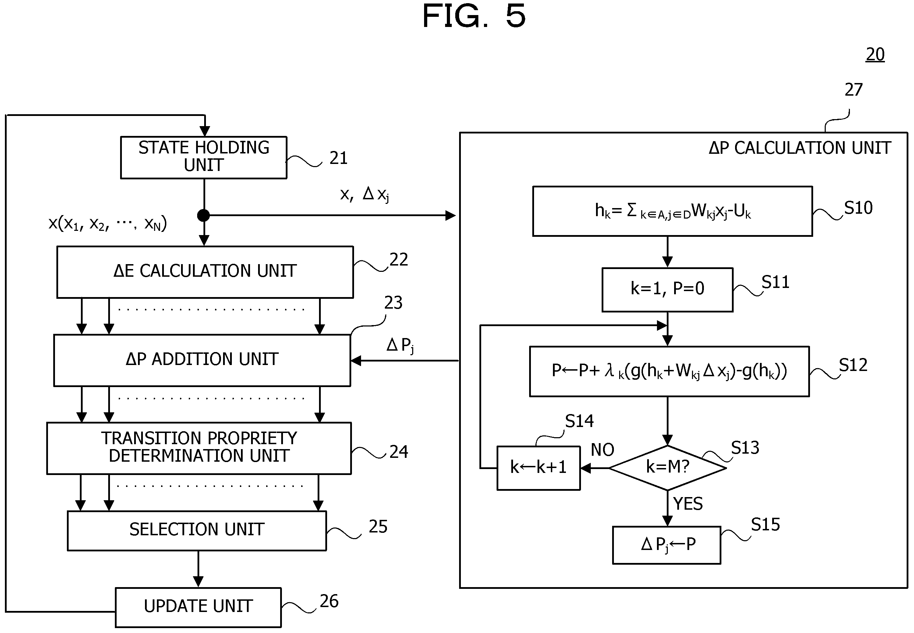

FIG. 5 is a diagram illustrating a data processing apparatus of a first comparative example.

A data processing apparatus 20 of the first comparative example performs, as in the known technology, calculation using all coefficients related to each constraint term ($W_{kj}$ in the example of Expression (5) and $a_{ij}$ in the example of Expression (6) described above) when performing calculation of $\Delta H$ associated with a change in a value of a state variable.

The data processing apparatus 20 of the comparative example includes a state holding unit 21, a $\Delta E$ calculation unit 22, a $\Delta P$ addition unit 23, a transition propriety determination unit 24, a selection unit 25, an update unit 26, and a $\Delta P$ calculation unit 27.

The state holding unit 21 holds a state x ($x_1$ to $x_N$) and outputs x. Furthermore, the state holding unit 21 outputs $\Delta x_j$.

The $\Delta E$ calculation unit 22 calculates $\Delta E_j$ (first term on a right side of Expression (5)) in a case where each of $x_1$ to $x_N$ changes.

The $\Delta P$ addition unit 23 adds $\Delta P_j$ (second term on the right side of Expression (5)) to $\Delta E_j$. With this configuration, $\Delta H_j$ in Expression (5) is calculated.

The transition propriety determination unit 24 performs flip determination processing for each of $x_1$ to $x_N$ based on a result of comparison between $\Delta H_j$ and the predetermined value described above.

The selection unit 25 selects, in a case where there is a plurality of state variables for which it is determined that flip is permissible, any one of the state variables.

The update unit 26 sends an identification number of a state variable for which it is determined that flip is permissible to the state holding unit 21 to change a value of the state variable. Furthermore, the update unit 26 updates $h_j$ and H.

The ΔP calculation unit 27 calculates $\Delta P_j$ in a case where each of $x_1$ to $x_N$ changes. The calculation of $\Delta P_j$ is performed as follows, for example.

The ΔP calculation unit 27 calculates $h_k$ (Step S10). In the example of FIG. 5, $h_k$ is calculated using j instead of i in Expression (4).

Next, the ΔP calculation unit 27 sets k = 1 and P = 0 (Step S11), and newly sets P as a result of calculating P + $\lambda_k(g(h_k + W_{kj}\Delta x_j) - g(h_k))$ based on the second term on the right side of Expression (5) (Step S12).

Then, the ΔP calculation unit 27 determines whether or not k = M holds (Step S13). In a case where it is determined that k = M does not hold, the ΔP calculation unit 27 sets k to k + 1 (Step S14), and repeats the processing from Step S12.

In a case where it is determined that k = M holds, the ΔP calculation unit 27 outputs P as $\Delta P_j$ (Step S15).

In the processing as described above, the processing of Step S12 is repeated M times to calculate $\Delta P_j$ for each of $x_1$ to $x_N$. For example, reading of $W_{kj}$ and addition processing are performed M times. Thus, a calculation amount proportional to N × M is needed to calculate N $\Delta P_j$'s, and the calculation amount is large. Furthermore, a data transfer amount for the reading is large. This is because the M $W_{kj}$'s are serially read in calculating one $\Delta P_j$.

In order to reduce the calculation amount, it is also conceivable to use the following data processing apparatus.

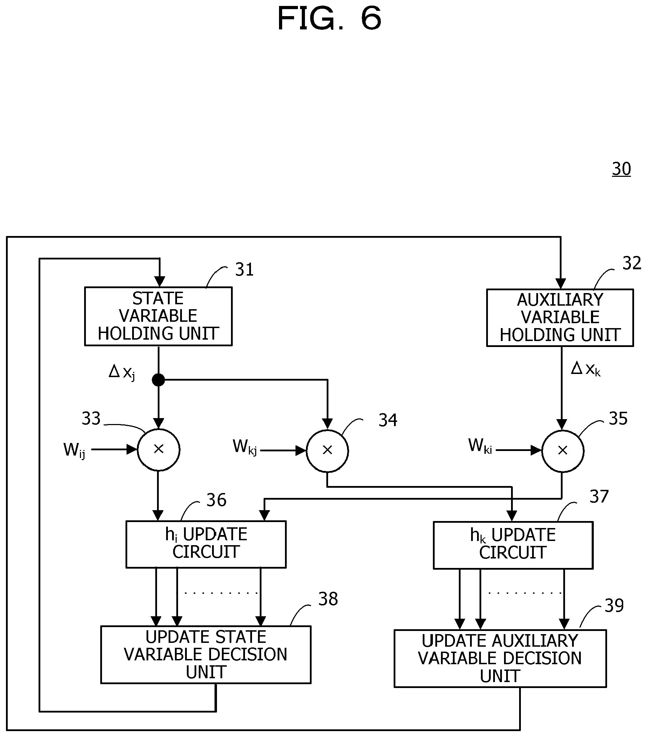

FIG. 6 is a diagram illustrating a data processing apparatus of a second comparative example.

A data processing apparatus 30 of the second comparative example includes a state variable holding unit 31, an auxiliary variable holding unit 32, multipliers 33, 34, and 35, an $h_i$ update circuit 36, an $h_k$ update circuit 37, an update state variable decision unit 38, and an update auxiliary variable decision unit 39.

The state variable holding unit 31 holds N state variables ($x_i$). Furthermore, the state variable holding unit 31 outputs a change amount ($\Delta x_j$) of $x_j$ of a flip candidate.

The auxiliary variable holding unit 32 holds M auxiliary variables ($x_k$). A variable that becomes 0 in a case where the constraint condition with the identification number = k is satisfied and that becomes 1 in a case where the constraint condition with the identification number = k is not satisfied is represented by $x_k$. Furthermore, the auxiliary variable holding unit 32 outputs a change amount ($\Delta x_k$) of $x_k$ of a flip candidate.

In a case where such auxiliary variables are used, H(x) may be represented by the following Expression (13), for example.

[Expression 13]

$$H(x) = E(x) + P(x) \tag{13}$$

$$= E(x) + \sum_{k \in A} \lambda_k \left( \sum_{i \in D} W_{ki} x_i - U_k \right) x_k$$

Furthermore, in the data processing apparatus 30 of the second comparative example, $h_i$ may be represented by the following Expression (14).

[Expression 14]

$$h_i = \sum_{j \in D} W_{ij} x_j + b_i - \sum_{k \in A} \lambda_k W_{ki} x_k \tag{14}$$

Furthermore, $h_k$ may be represented by the following Expression (15).

[Expression 15]

$$h_k = \sum_{i \in D, k \in A} W_{ki} x_i - U_k \tag{15}$$

Note that Expression (15) is the same as Expression (8) when it is assumed that $-U_k = b_k$.

The multiplier 33 outputs a product of $\Delta x_j$ and $W_{ij}$, which is a change amount of $h_i$ as indicated in Expression (14) in a case where a value of $x_j$ of the flip candidate changes.

The multiplier 34 outputs a product of $\Delta x_j$ and $W_{kj}$, which is a change amount of $h_k$ as indicated in Expression (15) in a case where the value of $x_j$ of the flip candidate changes.

The multiplier 35 outputs a product of $\Delta x_k$ and $W_{ki}$, which is a change amount of $h_i$ as indicated in Expression (14) in a case where a value of $x_k$ of the flip candidate changes.

The $h_i$ update circuit 36 updates $h_i$ by adding $W_{ij}\Delta x_j$ to the original $h_i$ in a case where the value of $x_j$ of the flip candidate changes. Furthermore, the $h_i$ update circuit 36 updates $h_i$ by adding $-\lambda_k W_{ki}\Delta x_k$ to the original $h_i$ in a case where the value of $x_k$ of the flip candidate changes.

The $h_k$ update circuit 37 updates $h_k$ by adding $W_{kj}\Delta x_j$ to the original $h_k$ in a case where the value of $x_j$ of the flip candidate changes.

The update state variable decision unit 38 calculates $\Delta H = -h_j \Delta x_j$ based on $h_j$, which is the first local field for $x_j$ of the flip candidate. Then, the update state variable decision unit 38 decides whether or not to change the value of $x_j$ based on a result of comparison between $\Delta H$ and a predetermined value, and in a case where it is decided to change the value of $x_j$, changes the value of $x_j$ held in the state variable holding unit 31.

The update auxiliary variable decision unit 39 calculates $\Delta H = +\lambda_k h_k \Delta x_k$ based on $h_k$, which is the second local field for $x_k$ of the flip candidate. Then, the update auxiliary variable decision unit 39 decides whether or not to change the value of $x_k$ based on a result of comparison between $\Delta H$ and a predetermined value, and in a case where it is decided to change the value of $x_k$, changes the value of $x_k$ held in the auxiliary variable holding unit 32.

In such a data processing apparatus 30, in a case where the value of the auxiliary variable ($x_k$) representing whether or not a certain constraint condition is violated is permitted to change, $h_i$ is updated based on the N $W_{ki}$'s. With this configuration, $W_{ki}$'s related to all the M constraint terms do not have to be read, and the number of times the addition processing (processing of adding $\Delta h_i = -\lambda_k W_{ki}\Delta x_k$ to the original $h_i$) is performed is suppressed, and a calculation amount for the update processing may be reduced.

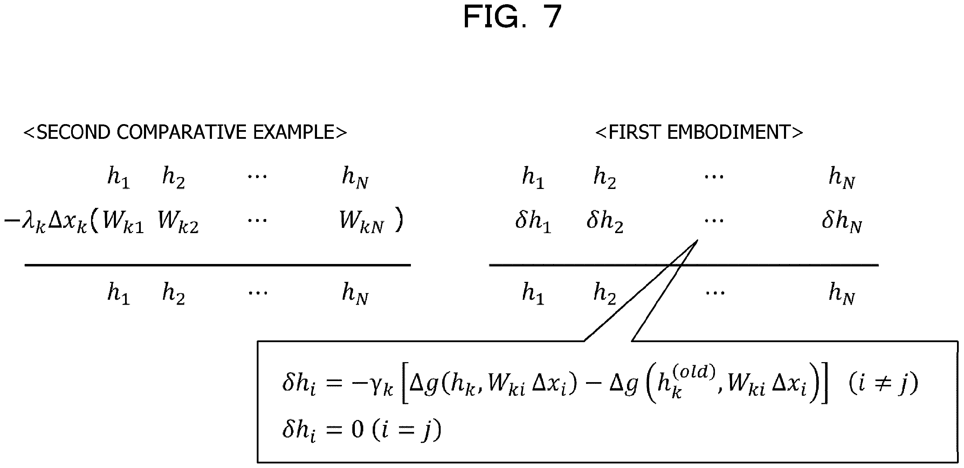

FIG. 7 is a diagram illustrating an example of updating the local fields in a case where the value of $x_k$ changes in the second comparative example and an example of updating the local fields in a case where the value of $h_k$ changes in the first embodiment.

In the data processing apparatus 30 of the second comparative example, in a case where the value of $x_k$ changes, updating is performed by adding $-\lambda_k \Delta x_k W_{ki}$ ($W_{k1}$ to $W_{kN}$) to the N $h_i$'s ($h_1$ to $h_N$). On the other hand, in the data processing apparatus 10 of the first embodiment, in a case where the value of $h_k$ changes, updating is performed by adding $\delta h_i$ ($\delta h_1$ to $\delta h_N$) to the N $h_i$'s ($h_1$ to $h_N$). In Expression (12), $-\gamma_k[\Delta g(h_k, W_{ki}\Delta x_i) - \Delta g(h_k^{(old)}, W_{ki}\Delta x_i)]$ is $\delta h_i$.

In the data processing apparatus 30 of the second comparative example, at the time of determining whether or not to change the value of the state variable of the flip candidate, the change amount of the constraint term associated with the change is not taken into consideration. Thus, the following prediction error may occur until H(x) is updated by $\Delta H = +\lambda_k h_k \Delta x_k$ as the value of the auxiliary variable changes.

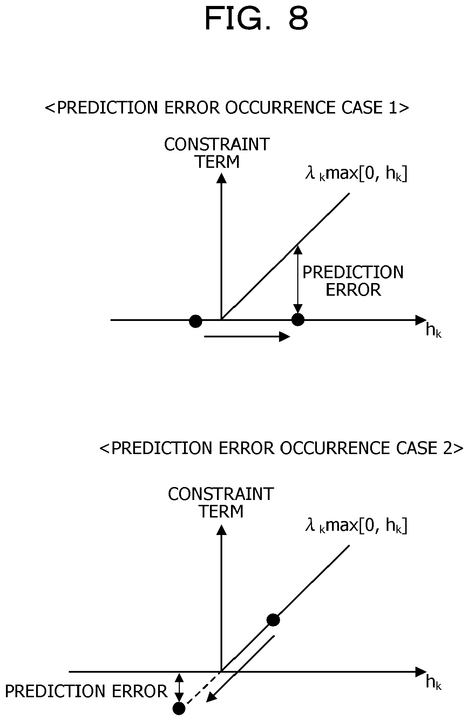

FIG. 8 is a diagram illustrating examples of occurrence of a prediction error in the data processing apparatus of the second comparative example. A vertical axis represents magnitude of a constraint term, and a horizontal axis represents $h_k$. In FIG. 8, the constraint term of an inequality constraint is represented by $\lambda_k \max[0, h_k]$.

In a prediction error occurrence case 1, a prediction error that occurs in a case where the inequality constraint changes from a satisfied state to a violated state is indicated. In a prediction error occurrence case 2, a prediction error that occurs in a case where the inequality constraint changes from a violated state to a satisfied state is indicated.

In either case, the prediction error as indicated in FIG. 8 may occur.

Thus, it may become difficult to improve a solution performance for an inequality constraint problem with a high degree of difficulty. Furthermore, in the data processing apparatus 30 of the second comparative example, the penalty functions that may be used are limited to rectified linear unit (ReLU) type functions.

On the other hand, in the data processing apparatus 10 of the first embodiment, as in Expression (10) described above, a value reflecting not only the change amount of E(x) associated with the change in the value of $x_i$ but also the change amount of P(x) (corresponding to $g(h_k + W_{ki}\Delta x_i) - g(h_k)$ of FIG. 2) may be used as $h_i$. Thus, the flip determination may be made based on more accurate $\Delta H_i$. With this configuration, a solution performance may be improved.

Furthermore, the penalty functions that may be handled by the data processing apparatus 10 of the first embodiment are not limited to the ReLU type functions.

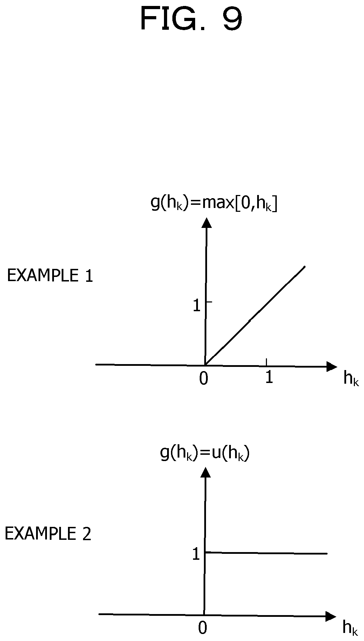

FIG. 9 is a diagram illustrating examples of the penalty function that may be used.

In Example 1, $\max[0, h_k]$, which is the ReLU type function, is indicated as the penalty function $g(h_k)$.

In Example 2, a step function $u(h_k)$ is indicated as the penalty function $g(h_k)$.

Furthermore, a constraint term that combines each of the two penalty functions described above may also be used.

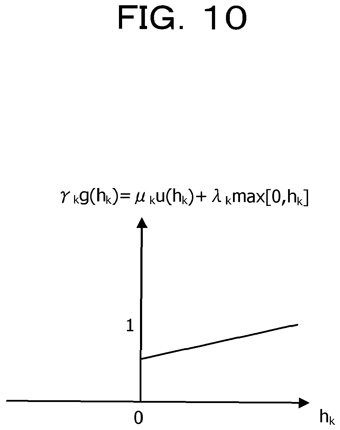

FIG. 10 is a diagram illustrating an example of the constraint term.

In FIG. 10, $\gamma_k g(h_k) = \mu_k u(h_k) + \lambda_k \max[0, h_k]$, which is the sum of a function obtained by weighting the step function $u(h_k)$ by a proportional coefficient $\mu_k$ and a function obtained by weighting $\max[0, h_k]$ by a proportional coefficient $\lambda_k$, is represented as an example of the constraint term.

Note that the penalty functions that may be used are not limited to the examples described above. However, since the calculation of Expression (12) is performed when $h_i$ is updated, it is desirable that the penalty function be a function that is relatively easy to calculate.

(Second Embodiment)

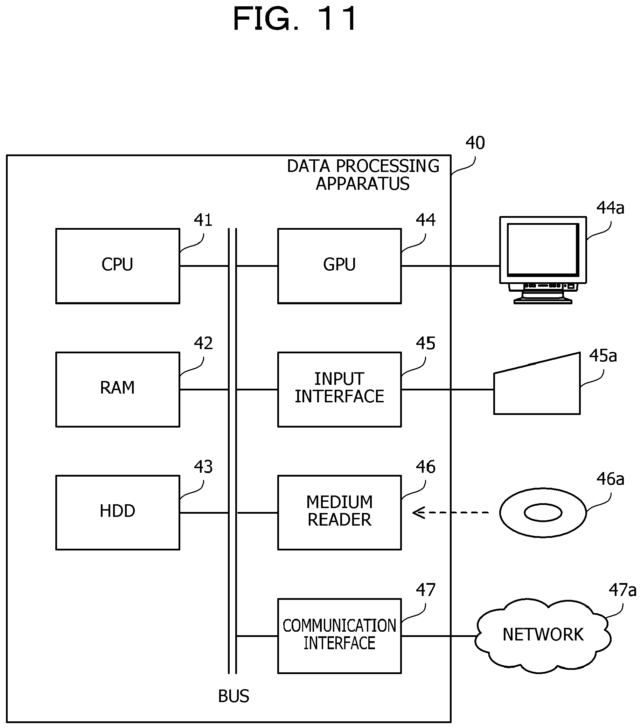

FIG. 11 is a block diagram illustrating a hardware example of a data processing apparatus of a second embodiment.

A data processing apparatus 40 is, for example, a computer, and includes a CPU 41, a random access memory (RAM) 42, an HDD 43, a GPU 44, an input interface 45, a medium reader 46, and a communication interface 47. The units described above are connected to a bus.

The CPU 41 is a processor including an arithmetic circuit that executes a command of a program. The CPU 41 loads at least a part of a program and data stored in the HDD 43 into the RAM 42 to execute the program. Note that the CPU 41 may include a plurality of processor cores, the data processing apparatus 40 may include a plurality of processors, and processing to be described below may be executed in parallel by using the plurality of processors or processor cores. Furthermore, a set of a plurality of processors (multiprocessor) may be called a "processor".

The RAM 42 is a volatile semiconductor memory temporarily storing a program executed by the CPU 41 and data used by the CPU 41 for arithmetic operations. Note that the data processing apparatus 40 may include a memory of a type other than the RAM 42, or may include a plurality of memories.

The HDD 43 is a non-volatile storage device storing programs for software such as an operating system (OS), middleware, or application software, and data. The programs include, for example, a program for causing the data processing apparatus 40 to execute processing for searching for a solution to a discrete optimization problem. Note that the data processing apparatus 40 may include another type of storage device such as a flash memory or a solid state drive (SSD), or may include a plurality of non-volatile storage devices.

The GPU 44 outputs an image to a display 44a connected to the data processing apparatus 40 in accordance with a command from the CPU 41. As the display 44a, a cathode ray tube (CRT) display, a liquid crystal display (LCD), a plasma display panel (PDP), an organic electro-luminescence (OEL) display, or the like may be used.

The input interface 45 acquires an input signal from an input device 45a connected to the data processing apparatus 40, and outputs the input signal to the CPU 41. As the input device 45a, a pointing device such as a mouse, a touch panel, a touch pad, or a trackball, a keyboard, a remote controller, a button switch, or the like may be used. Furthermore, a plurality of types of input devices may be connected to the data processing apparatus 30.

The medium reader 46 is a reading device that reads a program and data recorded on a recording medium 46a. As the recording medium 46a, for example, a magnetic disk, an optical disk, a magneto-optical disk (MO), a semiconductor memory, or the like may be used. The magnetic disk includes a flexible disk (FD) and an HDD. The optical disk includes a compact disc (CD) and a digital versatile disc (DVD).

The medium reader 46 copies, for example, a program and data read from the recording medium 46a to another recording medium such as the RAM 42 or the HDD 43. The read program is executed by, for example, the CPU 41. Note that the recording medium 46a may be a portable recording medium, and may be used for distribution of a program and data. Furthermore, the recording medium 46a or the HDD 43 may be referred to as a computer-readable recording medium.

The communication interface 47 is an interface that is connected to a network 47a and communicates with another information processing device via the network 47a. The communication interface 47 may be a wired communication interface connected to a communication device such as a switch by a cable, or may be a wireless communication interface connected to a base station by a wireless link.

Next, functions and processing procedures of the data processing apparatus 40 will be described.

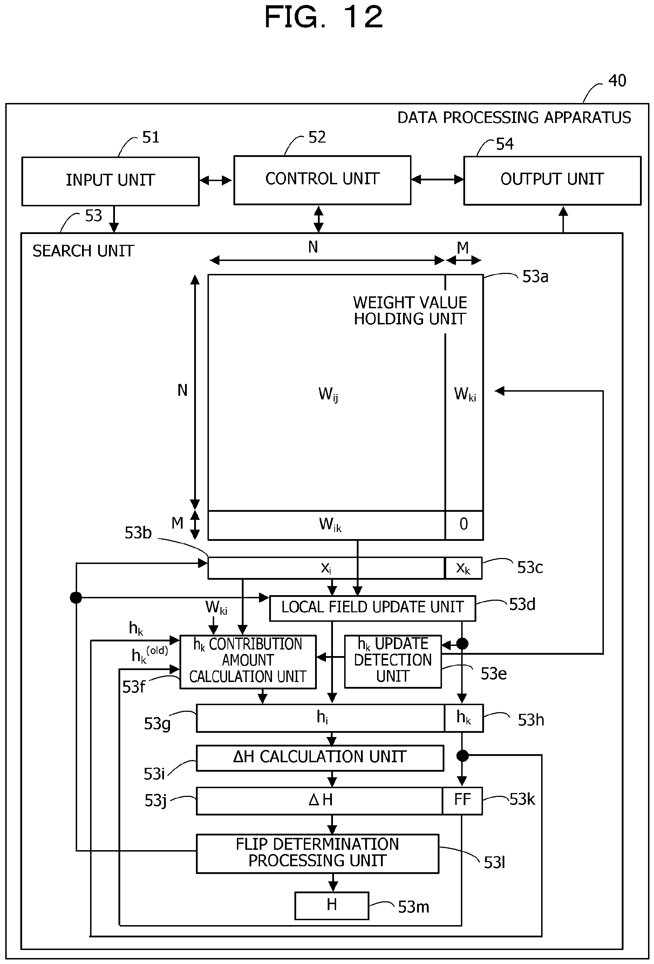

FIG. 12 is a block diagram illustrating a functional example of the data processing apparatus.

The data processing apparatus 40 includes an input unit 51, a control unit 52, a search unit 53, and an output unit 54.

The input unit 51, the control unit 52, the search unit 53, and the output unit 54 may be implemented by using, for example, a program module executed by the CPU 41 or a storage area (register or cache memory) in the CPU 41. Note that the search unit 53 may be further implemented by using a storage area secured in the RAM 42 or the HDD 43.

The input unit 51 receives, for example, input of initial values of N state variables, problem information, and calculation conditions. The problem information includes, for example, $W_{ij}$, $b_i$, and $\gamma_k$ in Expression (10) in addition to $W_{ki}$ and $b_k$ in Expression (8). The calculation conditions include, for example, the number of replicas, a replica exchange cycle, and a value of a temperature parameter set for each replica in a case where the replica exchange method is executed, a temperature parameter change schedule in a case where the simulated annealing method is performed, calculation end conditions, and the like.

These pieces of information may be input by operation of the input device 45a by a user, or may be input via the recording medium 46a or the network 47a.

The control unit 52 controls each unit of the data processing apparatus 40 to execute processing to be described later.

The search unit 53 repeats flip determination processing and update processing under the control of the control unit 52, thereby searching for a state where a value (energy) of an evaluation function is minimized.

The output unit 54 outputs a search result (calculation result) by the search unit 53.

For example, the output unit 54 may output the calculation result to the display 44a to be displayed, transmit the calculation result to another information processing device via the network 47a, or store the calculation result in an external storage device.

The search unit 53 includes a weight value holding unit 53a, a state variable holding unit 53b, an auxiliary variable holding unit 53c, a local field update unit 53d, an $h_k$ update detection unit 53e, and an $h_k$ contribution amount calculation unit 53f. Moreover, the search unit 53 includes an $h_i$ holding unit 53g, an $h_k$ holding unit 53h, a $\Delta H$ calculation unit 53i, a $\Delta H$ holding unit 53j, a flip-flop (FF) 53k, a flip determination processing unit 53l, and an H holding unit 53m.

The weight value holding unit 53a holds $N \times N$ $W_{ij}$'s, and also holds $M \times N$ $W_{ki}$'s and $N \times M$ $W_{ik}$'s. Note that, since $W_{ki} = W_{ik}$, the weight value holding unit 53a does not need to hold $N \times M$ $W_{ik}$'s. Furthermore, the weight value holding unit 53a does not need to hold $W_{ki}$ whose value is 0.

The state variable holding unit 53b holds values of N state variables ($x_i$). Furthermore, in a case where a state variable of a flip candidate is specified among the N state variables, the state variable holding unit 53b outputs a change amount of a value of the state variable. For example, in a case where $x_j$ is specified, $\Delta x_j = 1 - 2x_j$ is output.

The auxiliary variable holding unit 53c holds values of M auxiliary variables ($x_k$). For example, $x_k$ is used to detect whether a constraint condition is satisfied, and $x_k$ is the same as that used in the data processing apparatus 30 of the second comparative example described above. In FIG. 12, illustration of a configuration for updating $x_k$ is omitted. As indicated in FIG. 9, in a case where $h_k > 0$, $g(h_k) > 0$ and a constraint condition violation occurs. Thus, for example, a configuration is provided in which $x_k = 1$ in a case where $h_k > 0$, and $x_k = 0$ in a case where $h_k \leq 0$. However, the data processing apparatus 40 of the present embodiment does not need to use $x_k$. In that case, the auxiliary variable holding unit 53c is unnecessary.

In a case where a change in a value of a state variable of a flip candidate is permitted (in a case where it is determined that flip is permissible), the local field update unit 53d reads a weight value between the state variable and another state variable from the weight value holding unit 53a, and updates a local field by using the weight value. For example, in a case where it is determined that flip is permissible for $x_j$, the local field update unit 53d updates $h_i$ by adding $W_{ij}\Delta x_j$ to each $h_i$.

Furthermore, in a case where it is determined that flip is permissible for the state variable of the flip candidate, the local field update unit 53d reads a weight value whose value is non-zero among weight values between the state variable and M local fields ($h_k$), and updates $h_k$ by using the weight value. For example, in a case where it is determined that flip is permissible for $x_j$, the local field update unit 53d updates $h_k$ by adding $W_{kj}\Delta x_j$ to $h_k$.

The $h_k$ update detection unit 53e detects update of $h_k$.

The $h_k$ contribution amount calculation unit 53f reads non-zero $W_{ki}$ from the weight value holding unit 53a in order to calculate a change amount of $h_i$ ($\delta h_i$ of FIG. 7) due to a change in a value of $h_k$ whose update is detected. Moreover, the $h_k$ contribution amount calculation unit 53f acquires $h_k$ from the $h_k$ holding unit 53h, and acquires $h_k^{(old)}$ from the FF 53k. Then, the $h_k$ contribution amount calculation unit 53f calculates $\delta h_i$, and updates $h_i$ by adding $\delta h_i$ to the original $h_i$.

The $h_i$ holding unit 53g holds N $h_i$'s.

The $h_k$ holding unit 53h holds M $h_k$'s.

The $\Delta H$ calculation unit 53i calculates $\Delta H$ based on a local field corresponding to a state variable of a flip candidate. For example, in a case where the flip candidate is $x_j$, the $\Delta H$ calculation unit 53i calculates $\Delta H_j = -h_j\Delta x_j$.

The $\Delta H$ holding unit 53j holds $\Delta H_j$ calculated by the $\Delta H$ calculation unit 53i.

The FF 53k holds $h_k$, and delays timing of outputting $h_k$, thereby supplying $h_k^{(old)}$ to the $h_k$ contribution amount calculation unit 53f.

The flip determination processing unit 53l performs flip determination processing to determine whether or not flip is permissible for a state variable of a flip candidate based on a result of comparison between $\Delta H$ and a predetermined value. The predetermined value is, for example, a noise value obtained based on a random number and a value of a temperature parameter. For example, in a case where $-\Delta H \geq \log(\text{rand}) \times T$, the flip determination processing unit 53l determines that a change in a value of the state variable of the flip candidate is permitted.

Furthermore, the flip determination processing unit 53l sends an identification number of a state variable for which it is determined that flip is permissible to the state variable holding unit 53b to update a value of the state variable.

Moreover, the flip determination processing unit 53l updates H(x) held in the H holding unit 53m based on ΔH generated by a change in the value of the state variable for which it is determined that flip is permissible.

The H holding unit 53m holds H(x). Note that the H holding unit 53m may hold H(x) and a state in a case where the energy becomes the minimum until then.

Next, an operation example of the data processing apparatus 40 of the second embodiment will be described.

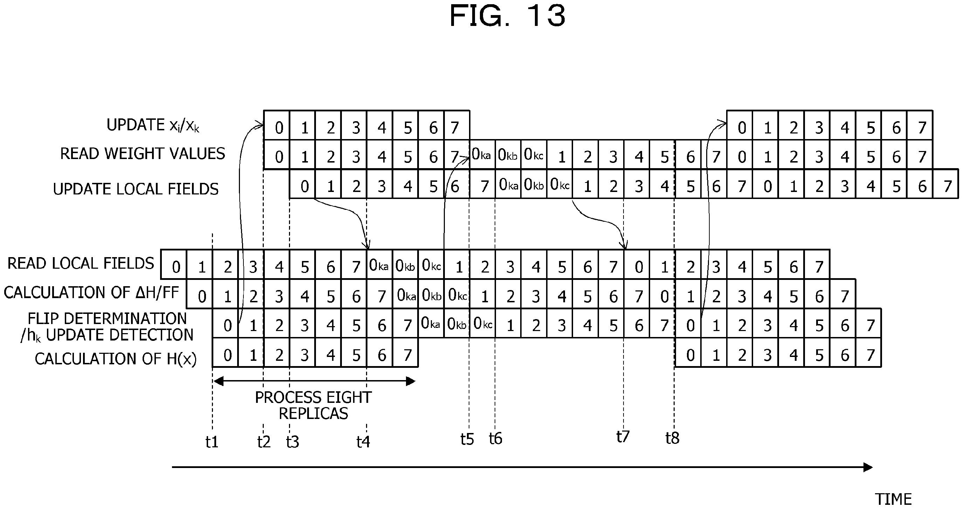

FIG. 13 is a diagram illustrating the operation example of the data processing apparatus of the second embodiment. In FIG. 13, an example in which pipeline processing is performed by using eight replicas is indicated. 0 to 7 are replica numbers. In FIG. 13, details of processing for a replica with the replica number = 0 are indicated, and other replicas are indicated in a simplified manner.

In the replica with the replica number = 0, flip determination processing is performed (t1), and $x_i$ and $x_k$ are updated according to a result thereof, and weight values for updating $h_i$ and $h_k$ are read (t2). Then, $h_i$ and $h_k$ are updated by the local field update unit 53d (t3). In a case where three $h_k$ (represented as $0_{ka}$, $0_{kb}$, and $0_{kc}$ in FIG. 13) are updated, for them, reading, output of $h_k^{(old)}$ by the FF 53k, and update detection of $h_k$ by $h_k$ update detection unit 53e are performed in order (t4 to t5).

Then, a corresponding $W_{ki}$ is read in order from $h_k$ for which the update detection is ended (t5), and $h_i$ is updated based on $\delta h_i$ described above by the $h_k$ contribution amount calculation unit 53f (t6). Thereafter, the updated $h_i$ is read (t7), and calculation of ΔH, flip determination processing, and calculation of H(x) are performed (t8).

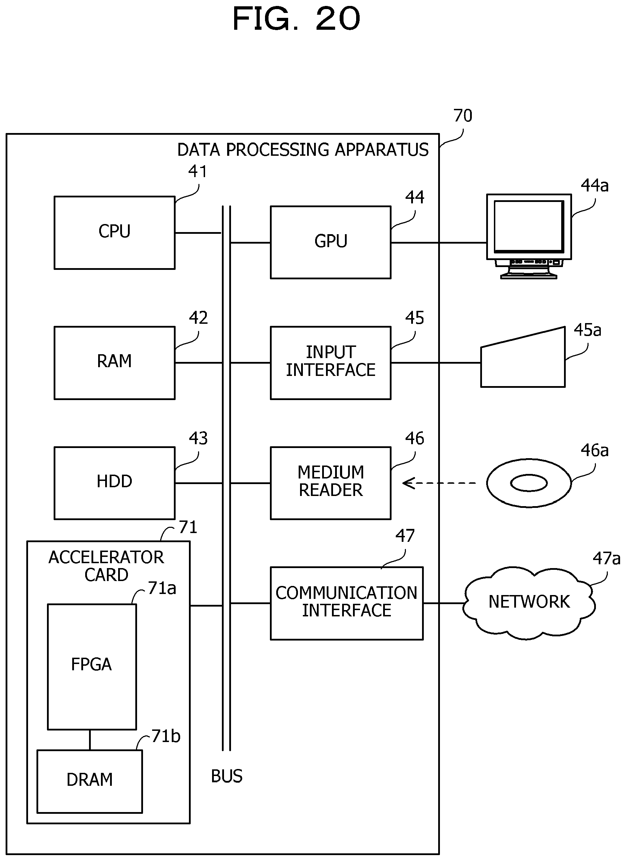

Incidentally, the search unit 53 illustrated in FIG. 12 may also be implemented by using an electronic circuit such as an FPGA as described later (see FIG. 20). For example, the $h_k$ contribution amount calculation unit 53f of the search unit 53 may be implemented by the following circuit.

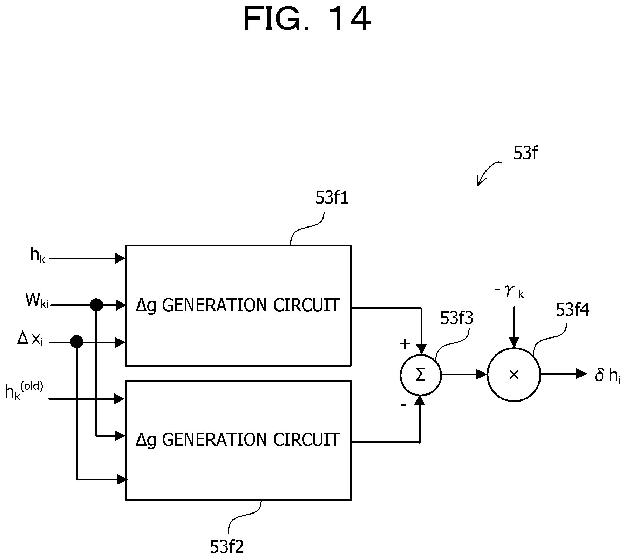

FIG. 14 is a diagram illustrating a circuit example of the $h_k$ contribution amount calculation unit.

The $h_k$ contribution amount calculation unit 53f includes Δg generation circuits 53f1 and 53f2, an adder 53f3, and a multiplier 53f4.

The Δg generation circuit 53f1 generates (calculates) and outputs $\Delta g(h_k, W_{ki}\Delta x_i)$ indicated in Expression (12) based on Expression (11).

The Δg generation circuit 53f2 generates (calculates) and outputs $\Delta g(h_k^{(old)}, W_{ki}\Delta x_i)$ indicated in Expression (12) based on Expression (11).

The adder 53f3 calculates and outputs $\Delta g(h_k, W_{ki}\Delta x_i) - \Delta g(h_k^{(old)}, W_{ki}\Delta x_i)$.

The multiplier 53f4 outputs $\delta h_i$, which is a value obtained by multiplying $\Delta g(h_k, W_{ki}\Delta x_i) - \Delta g(h_k^{(old)}, W_{ki}\Delta x_i)$, which is the output of the adder 53f3, by $-\gamma_k$.

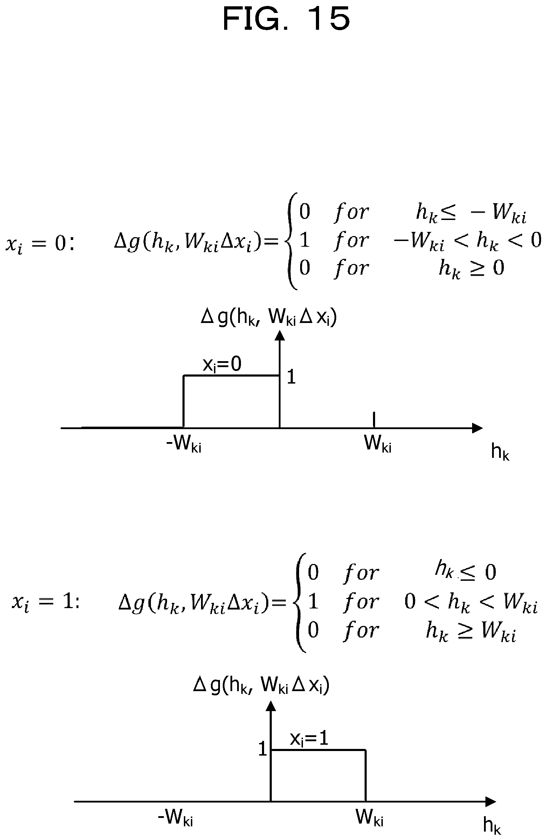

FIG. 15 is a diagram illustrating a first calculation example of Δg.

In FIG. 15, a calculation example of Δg in a case where g(h) is a step function (u(h)) is indicated.

In a case where a value before a change is $x_i = 0$, $\Delta g(h_k, W_{ki}\Delta x_i)$ is 0 in a case where $h_k \leq -W_{ki}$, 1 in a case where $-W_{ki} < h_k < 0$, and 0 in a case where $h_k \geq 0$.

In a case where the value before the change is $x_i = 1$, $\Delta g(h_k, W_{ki}\Delta x_i)$ is 0 in a case where $h_k \leq 0$, 1 in a case where $0 < h_k < W_{ki}$, and 0 in a case where $h_k \geq W_{ki}$.

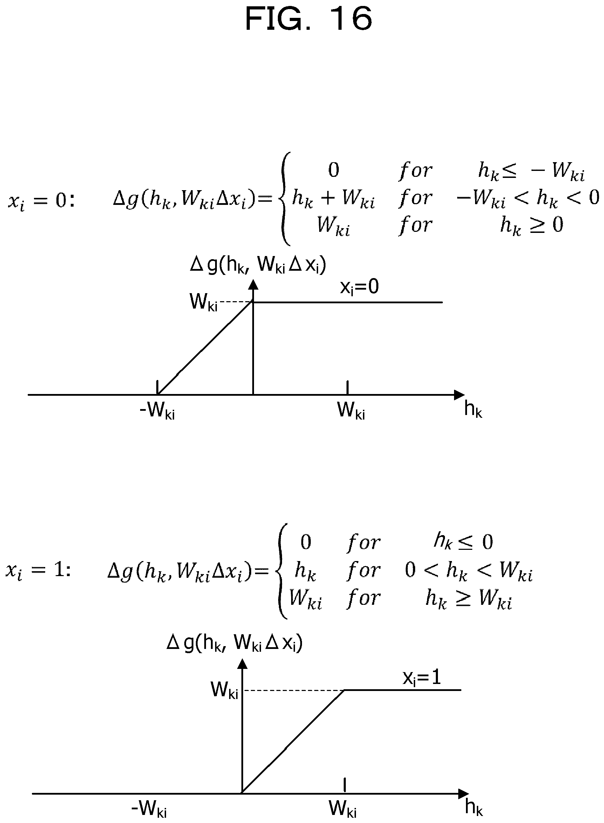

FIG. 16 is a diagram illustrating a second calculation example of Δg.

In FIG. 16, a calculation example of Δg in a case where g(h) is a Max function (max[0, h]) is indicated.

In a case where a value before a change is $x_i = 0$, $\Delta g(h_k, W_{ki}\Delta x_i)$ is 0 in a case where $h_k \leq -W_{ki}$, $h_k + W_{ki}$ in a case where $-W_{ki} < h_k < 0$, and $W_{ki}$ in a case where $h_k \geq 0$.

In a case where the value before the change is $x_i = 1$, $\Delta g(h_k, W_{ki}\Delta x_i)$ is 0 in a case where $h_k \leq 0$, $h_k$ in a case where $0 < h_k < W_{ki}$, and $W_{ki}$ in a case where $h_k \geq W_{ki}$.

Note that it is also possible to combine Δg as indicated in FIG. 15 and FIG. 16.

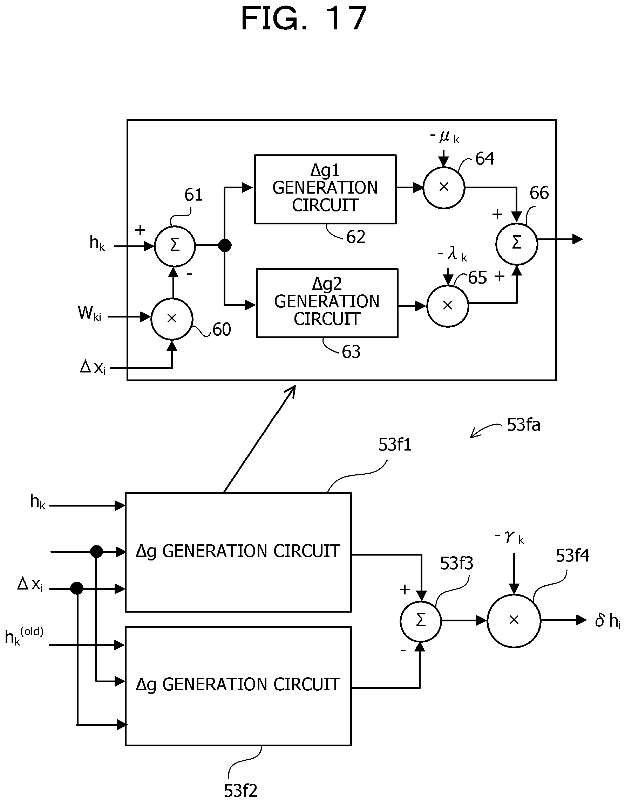

FIG. 17 is a diagram illustrating an example of the Δg generation circuits that generate Δg by combining a plurality of the penalty functions.

The Δg generation circuit 53f1 includes a multiplier 60, an adder 61, a Δg1 generation circuit 62, a Δg2 generation circuit 63, multipliers 64 and 65, and an adder 66.

The multiplier 60 outputs $W_{ki}\Delta x_i$, which is a product of $W_{ki}$ and $\Delta x_i$.

The adder 61 outputs the sum of $h_k$ and $-W_{ki}\Delta x_i$.

The Δg1 generation circuit 62 generates, for example, $\Delta g(h_k, W_{ki}\Delta x_i)$ based on the step function, which is indicated in FIG. 15.

The Δg2 generation circuit 63 generates, for example, $\Delta g(h_k, W_{ki}\Delta x_i)$ based on the Max function, which is indicated in FIG. 16.

The multiplier 64 outputs a value obtained by multiplying $\Delta g(h_k, W_{ki}\Delta x_i)$ generated by the Δg1 generation circuit 62 by $-\mu_k$.

The multiplier 65 outputs a value obtained by multiplying $\Delta g(h_k, W_{ki}\Delta x_i)$ generated by the Δg2 generation circuit 63 by $-\lambda_k$.

The adder 66 outputs a value obtained by adding the output of the multipliers 64 and 65.

Hereinafter, a processing procedure (data processing method) of the data processing apparatus 40 of the second embodiment will be described by using flowcharts.

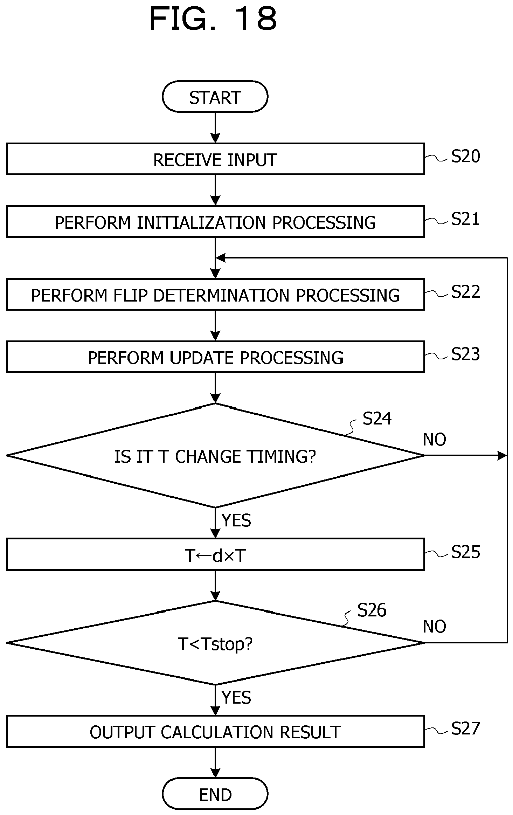

FIG. 18 is a flowchart illustrating a flow of an example of the data processing method.

Note that, in the following, an example in which search is performed by the simulated annealing method is indicated.

Step S20: The input unit 51 receives input of initial values of N state variables, problem information, and calculation conditions (for example, a parameter d, Tstop, and the like to be described later). The initial values of the N state variables are held in the state variable holding unit 53b. Furthermore, a weight value included in the problem information is held in the weight value holding unit 53a. The calculation conditions are supplied to the control unit 52.

Step S21: The control unit 52 performs initialization processing. In the initialization processing, for example, the following processing is performed.

The control unit 52 calculates an initial value of $h_k$ indicated in Expression (8) and an initial value of $h_i$ indicated in Expression (10) based on the initial values of the N state variables and the problem information. The calculated initial values of N $h_i$'s are held in the $h_i$ holding unit 53g, and the calculated initial values of M $h_k$'s are held in the $h_k$ holding unit 53h.

Furthermore, the control unit 52 calculates an initial value of H(x) based on the initial values of the N state variables and the problem information. The calculated initial value of H(x) is held in, for example, the H holding unit 53m.

Step S22: The search unit 53 performs flip determination processing. In the processing of Step S22, for example, a state variable of a flip candidate is selected, and ΔH is calculated based on $h_i$ corresponding to the state variable. Then, based on a result of comparison between ΔH and a predetermined value, it is determined whether or not flip is permissible for the state variable of the flip candidate. The predetermined value is a noise value (for example, log(rand) × T) obtained based on a random number and a value of a temperature parameter (T).

Step S23: The search unit 53 performs update processing. In the processing of Step S23, a value of the state variable for which it is determined that flip is permissible is updated. Moreover, $h_i$, $h_k$, and H(x) are updated as the value of the state variable is updated. An example of a procedure of the update processing of the local fields ($h_i$ and $h_k$) will be described later.

Step S24: The control unit 52 determines whether or not it is T change timing. For example, each time the state variable is updated a predetermined number of times, it is determined that it is the T change timing. The control unit 52 performs processing of Step S25 in a case where it is determined that it is the T change timing, and repeats the processing from Step S22 in a case where it is determined that it is not the T change timing.

Step S25: The control unit 52 updates T by performing d × T. One of parameters included in the calculation conditions is represented by d, and d has a value smaller than 1 (for example, 0.99 or the like).

Step S26: The control unit 52 determines whether or not T < Tstop holds. A parameter representing a calculation end condition is represented by Tstop. In a case where the control unit 52 determines that T < Tstop holds, processing of Step S27 is performed, and in a case where the control unit 52 determines that T < Tstop does not hold, the processing from Step S22 is repeated.

Step S27: The output unit 54 outputs a calculation result. With this configuration, the processing ends. The calculation result is, for example, total energy and a state in a case where the energy becomes the minimum until then.

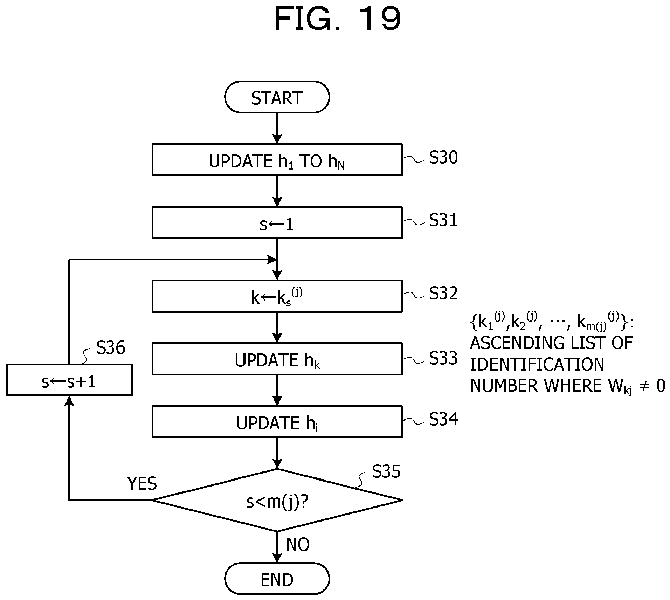

FIG. 19 is a flowchart illustrating a flow of an example of the local field update processing.

Step S30: In a case where it is determined that flip is permissible for the state variable of the flip candidate, the local field update unit 53d updates N local fields ($h_1$ to $h_N$) corresponding to the N state variables. In a case where a change in a value of $x_j$ of the flip candidate is permitted (in a case where it is determined that flip is permissible), the local field update unit 53d reads the N $W_{ij}$'s from the weight value holding unit 53a, and updates the N $h_i$'s by adding $W_{ij}\Delta x_j$ to each of the N $h_i$'s.

Step S31: The control unit 52 sets 1 to a loop variable s.

Step S32: The control unit 52 sets $k_s^{(j)}$ as k, which is an identification number of a constraint term. The s-th k included in an ascending list $\{k_1^{(j)}, k_2^{(j)},..., k_{m(j)}^{(j)}\}$ of the identification number k where $W_{kj} \neq 0$ is represented by $k_s^{(j)}$. Note that j is an identification number of the state variable for which it is determined that flip is permissible. Such a list is, for example, created in advance for each of the N state variables and stored in a storage unit (not illustrated).

Step S33: The local field update unit 53d updates $h_k$. For example, in a case where it is determined that flip is permissible for $x_j$, the local field update unit 53d updates $h_k$ by adding $W_{kj}\Delta x_j$ to $h_k$.

Step S34: The $h_k$ contribution amount calculation unit 53f updates $h_i$. The $h_k$ contribution amount calculation unit 53f updates $h_i$ corresponding to a state variable whose weight value with $h_k$ is non-zero based on Expression (12).

Step S35: The control unit 52 determines whether or not s < m(j) holds. The control unit 52 performs processing of Step S36 in a case where it is determined that s < m(j) holds, and ends the update processing in a case where it is determined that s < m(j) does not hold.

Step S36: The control unit 52 sets s to s + 1. Thereafter, the processing from Step S32 is repeated.

Note that the order of the processing illustrated in FIG. 18 and FIG. 19 is an example, and the order of the processing may be appropriately changed.

According to the data processing apparatus 40 and the data processing method of the second embodiment as described above, $h_i$ and $h_k$ may be updated with the degree of parallelism of N + M, and no update is performed for $h_k$ whose weight value with the state variable whose value is permitted to change is 0 (see FIG. 19). Furthermore, for such $h_k$, a value thereof does not change. Thus, $h_i$ is not further updated by Expression (12) using that $h_k$. Furthermore, $h_i$ corresponding to a state variable whose weight value with $h_k$ whose value has changed is 0 is also not further updated. Thus, a calculation amount may be reduced. Furthermore, a data transfer amount may also be reduced.

Furthermore, according to the data processing apparatus 40 and the data processing method of the second embodiment, $h_i$ used for calculating $\Delta H$ is the value reflecting not only the change amount of E(x) associated with the change in the value of the state variable but also the change amount of P(x). For example, more accurate $\Delta H$ may be calculated. Thus, also at the time of determining whether or not to change the value of the state variable of the flip candidate, the flip determination based on the change amount of the constraint term associated with the change may be made. With this configuration, a solution performance may be improved.

Furthermore, the penalty functions that may be used are not limited to the ReLU type. For example, by using the configuration illustrated in FIG. 17, a penalty function combining a plurality of penalty functions may also be used. With this configuration, it is also possible to properly use an inequality constraint to be observed (hard constraint) and a soft constraint whose violation is permitted by comparison with E(x).

Note that, as described above, the processing contents described above may be implemented by causing the data processing apparatus 40 to execute a program.

The program may be recorded in a computer-readable recording medium (for example, the recording medium 46a). As the recording medium, for example, a magnetic disk, an optical disk, a magneto-optical disk, a semiconductor memory, or the like may be used. The magnetic disk includes an FD and an HDD. The optical disk includes a CD, a CD-recordable (R)/rewritable (RW), a DVD, and a DVD-R/RW. The program may be recorded in a portable recording medium and distributed. In that case, the program may be copied from the portable recording medium to another recording medium (for example, the HDD 43) and then executed.

FIG. 20 is a diagram illustrating another example of the data processing apparatus. In FIG. 20, elements same as the elements illustrated in FIG. 11 are denoted by the same reference signs.

A data processing apparatus 70 includes an accelerator card 71 connected to a bus.

The accelerator card 71 is a hardware accelerator that searches for a solution to a discrete optimization problem. The accelerator card 71 includes an FPGA 71a and a DRAM 71b.

In the data processing apparatus 70, the FPGA 71a performs, for example, the processing of the control unit 52 and the search unit 53 illustrated in FIG. 12.

Furthermore, the DRAM 71b functions as, for example, the weight value holding unit 53a illustrated in FIG. 12.

Note that there may be a plurality of the accelerator cards 71.

In the above, one aspect of the data processing apparatus, the program, and the data processing method according to the embodiments has been described based on the embodiments. However, these are merely examples, and are not limited to the description above.

**Claims**

1. A data processing apparatus that searches for a combination of values of a plurality of state variables that minimizes or maximizes a value of an Ising-type evaluation function that includes the plurality of state variables, the data processing apparatus comprising:

   a storage unit that stores total energy that is a sum of a plurality of constraint terms and the value of the evaluation function, the values of the plurality of state variables, a first weight value between each of the plurality of state variables, a second weight value between one of the plurality of state variables and each of a plurality of constraint conditions, a first local field, and a second local field, the plurality of constraint terms including values that correspond to whether each of the plurality of constraint conditions is violated, the first local field indicating a first change amount of the total energy when a value of each of the plurality of state variables changes, the second local field being used to specify a constraint violation amount for each of the plurality of the constraint conditions; and
   a processing unit that repeats determining whether to permit a change in a value of a first state variable among the plurality of state variables based on the first local field, and when the change in the value of the first state variable is permitted, updating the first local field based on the first weight value, updating the second local field that corresponds to a constraint condition in which the second weight value with the first state variable is non-zero based on the second weight value, and updating the first local field based on the second local field before the updating and the second local field after the updating.

**2.** The data processing apparatus according to claim 1, wherein the first local field is represented by a difference between a second change amount of the value of the evaluation function and a sum total of a third change amounts of each of the plurality of constraint terms when the value of each of the plurality of state variables changes.

**3.** The data processing apparatus according to claim 2, wherein the processing unit is further configured to when the change in the value of the first state variable is permitted, updating the first local field based on a difference between the third change amount acquired by using the second local field before the updating and the third change amount acquired by using the second local field after the updating.

**4.** The data processing apparatus according to any one of claims 1 to 3, wherein the plurality of constraint terms is represented by at least one function selected from a step function, a Max function, and a combination of the step function and the Max function.

**5.** A data processing program that causes at least one computer to execute a process, the process comprising:

searching for a combination of values of a plurality of state variables that minimizes or maximizes a value of an Ising-type evaluation function that includes the plurality of state variables;
storing total energy that is a sum of a plurality of constraint terms and the value of the evaluation function, the values of the plurality of state variables, a first weight value between each of the plurality of state variables, a second weight value between one of the plurality of state variables and each of a plurality of constraint conditions, a first local field, and a second local field, the plurality of constraint terms including values that correspond to whether each of the plurality of constraint conditions is violated, the first local field indicating a first change amount of the total energy when a value of each of the plurality of state variables changes, the second local field being used to specify a constraint violation amount for each of the plurality of the constraint conditions; and
repeating determining whether to permit a change in a value of a first state variable among the plurality of state variables based on the first local field, and when the change in the value of the first state variable is permitted, updating the first local field based on the first weight value, updating the second local field that corresponds to a constraint condition in which the second weight value with the first state variable is non-zero based on the second weight value, and updating the first local field based on the second local field before the updating and the second local field after the updating.

**6.** The data processing program according to claim 5, wherein the first local field is represented by a difference between a second change amount of the value of the evaluation function and a sum total of a third change amounts of each of the plurality of constraint terms when the value of each of the plurality of state variables changes.

**7.** The data processing program according to claim 6, wherein the process further comprising when the change in the value of the first state variable is permitted, updating the first local field based on a difference between the third change amount acquired by using the second local field before the updating and the third change amount acquired by using the second local field after the updating.

**8.** The data processing program according to any one of claims 5 to 7, wherein the plurality of constraint terms is represented by at least one function selected from a step function, a Max function, and a combination of the step function and the Max function.

**9.** A data processing method for a computer to execute a process comprising:

searching for a combination of values of a plurality of state variables that minimizes or maximizes a value of an Ising-type evaluation function that includes the plurality of state variables;
storing total energy that is a sum of a plurality of constraint terms and the value of the evaluation function, the values of the plurality of state variables, a first weight value between each of the plurality of state variables, a second weight value between one of the plurality of state variables and each of a plurality of constraint conditions, a first local field, and a second local field, the plurality of constraint terms including values that correspond to whether each of the plurality of constraint conditions is violated, the first local field indicating a first change amount of the total energy when a value of each of the plurality of state variables changes, the second local field being used to specify a constraint violation amount for each of the plurality of the constraint conditions; and
repeating determining whether to permit a change in a value of a first state variable among the plurality of state variables based on the first local field, and when the change in the value of the first state variable is permitted, updating the first local field based on the first weight value, updating the second local field that corresponds to

EP 4 258 171 A1

a constraint condition in which the second weight value with the first state variable is non-zero based on the second weight value, and updating the first local field based on the second local field before the updating and the second local field after the updating.

10. The data processing method according to claim 9, wherein the first local field is represented by a difference between a second change amount of the value of the evaluation function and a sum total of a third change amounts of each of the plurality of constraint terms when the value of each of the plurality of state variables changes.

11. The data processing method according to claim 10, wherein the process further comprising
when the change in the value of the first state variable is permitted, updating the first local field based on a difference between the third change amount acquired by using the second local field before the updating and the third change amount acquired by using the second local field after the updating.

12. The data processing method according to any one of claims 9 to 11, wherein the plurality of constraint terms is represented by at least one function selected from a step function, a Max function, and a combination of the step function and the Max function.

# FIG. 1

$x_i$  STATE VARIABLE (DECISION VARIABLE) $x_i$ ($i \in D$)

$h_k$  SECOND LOCAL FIELD $h_k$ ($k \in A$)

**S1** SELECT STATE VARIABLE OF FLIP CANDIDATE

**S2** CALCULATE ΔH

**S3** PERFORM FLIP DETERMINATION

**S4** PERFORM UPDATE PROCESSING

$$\Delta H_i = -h_i \Delta x_i$$

$$h_i = \left( \sum_{j \in D} W_{ij} x_j + b_i \right) - \sum_{k \in A} \gamma_k \Delta g(h_k, W_{ki} \Delta x_i)$$

$$\Delta g(h_k, W_{ki} \Delta x_i) = \Delta x_i [g(h_k + W_{ki} \Delta x_i) - g(h_k)]$$

$$h_k = \sum_{i \in D, k \in A} W_{ki} x_i + b_k$$

$$h_i \leftarrow h_i + W_{ij} \Delta x_j$$

$$h_k \leftarrow h_k + W_{kj} \Delta x_j \quad (W_{kj} \neq 0)$$

$$h_i \leftarrow h_i - \gamma_k \left[ \Delta g(h_k, W_{ki} \Delta x_i) - \Delta g \left( h_k^{(old)}, W_{ki} \Delta x_i \right) \right]$$

**10** DATA PROCESSING APPARATUS

**12** PROCESSING UNIT

**11** STORAGE UNIT

TOTAL ENERGY H(x)

STATE VARIABLE $x_i$ (DECISION VARIABLE)

FIRST WEIGHT VALUE $W_{ij}$

SECOND WEIGHT VALUE $W_{ki}$

FIRST LOCAL FIELD $h_i$

SECOND LOCAL FIELD $h_k$

# FIG. 2

# FIG. 3

$$\frac{h_1 \quad h_2 \quad \cdots \quad h_N \quad h_{N+1} \quad \cdots \quad h_{N+M}}{h_1 \quad h_2 \quad \cdots \quad h_N \quad h_{N+1} \quad \cdots \quad h_{N+M}} +\Delta x_j \left( W_{1j} \quad W_{2j} \quad \cdots \quad W_{Nj} \quad W_{N+1,j} \quad \cdots \quad W_{N+M,j} \right)$$

FIG. 4

EP 4 258 171 A1

# FIG. 5

$$h_k = \sum_{k \in A, j \in D} W_{kj} x_j - U_k \quad \text{S10}$$

$$k=1, P=0 \quad \text{S11}$$

$$P \leftarrow P + \lambda_k (g(h_k + W_{kj} \Delta x_j) - g(h_k)) \quad \text{S12}$$

$$k=M? \quad \text{S13}$$

NO

$$k \leftarrow k+1 \quad \text{S14}$$

YES

$$\Delta P_j \leftarrow P \quad \text{S15}$$

ΔP CALCULATION UNIT — 27

20

STATE HOLDING UNIT — 21

$x(x_1, x_2, \cdots, x_N)$

$x, \Delta x_j$

ΔE CALCULATION UNIT — 22

$\Delta P_j$

ΔP ADDITION UNIT — 23

TRANSITION PROPRIETY DETERMINATION UNIT — 24

SELECTION UNIT — 25

UPDATE UNIT — 26

# FIG. 6

# FIG. 7

<SECOND COMPARATIVE EXAMPLE>

$$\frac{-\lambda_k \Delta x_k \left( \begin{array}{cccc} h_1 & h_2 & \cdots & h_N \\ W_{k1} & W_{k2} & \cdots & W_{kN} \end{array} \right)}{\begin{array}{cccc} h_1 & h_2 & \cdots & h_N \end{array}}$$

<FIRST EMBODIMENT>

$$\frac{\begin{array}{cccc} h_1 & h_2 & \cdots & h_N \\ \delta h_1 & \delta h_2 & \cdots & \delta h_N \end{array}}{\begin{array}{cccc} h_1 & h_2 & \cdots & h_N \end{array}}$$

$$\delta h_i = -\gamma_k \left[ \Delta g(h_k, W_{ki} \Delta x_i) - \Delta g\left(h_k^{(old)}, W_{ki} \Delta x_i\right)\right] \quad (i \neq j)$$

$$\delta h_i = 0 \ (i = j)$$

EP 4 258 171 A1

# FIG. 8

\<PREDICTION ERROR OCCURRENCE CASE 1\>

\<PREDICTION ERROR OCCURRENCE CASE 2\>

# FIG. 9

EXAMPLE 1

$g(h_k)=\max[0,h_k]$

EXAMPLE 2

$g(h_k)=u(h_k)$

# FIG. 10

$$\gamma_k g(h_k) = \mu_k u(h_k) + \lambda_k \max[0, h_k]$$

# FIG. 11

DATA PROCESSING APPARATUS — 40

CPU — 41

GPU — 44

44a

RAM — 42

INPUT INTERFACE — 45

45a

HDD — 43

MEDIUM READER — 46

46a

COMMUNICATION INTERFACE — 47

NETWORK — 47a

BUS

# FIG. 12

DATA PROCESSING APPARATUS — 40

| 51 | 52 | 54 |
|---|---|---|
| INPUT UNIT | CONTROL UNIT | OUTPUT UNIT |

SEARCH UNIT — 53

N

M

WEIGHT VALUE HOLDING UNIT — 53a

N

$W_{ij}$

$W_{ki}$

M

$W_{ik}$

0

53b

$x_i$

$x_k$ — 53c

$W_{ki}$

LOCAL FIELD UPDATE UNIT — 53d

$h_k$

$h_k$ CONTRIBUTION AMOUNT CALCULATION UNIT

$h_k^{(old)}$

53f

$h_k$ UPDATE DETECTION UNIT

53e

53g

$h_i$

$h_k$ — 53h

53i

ΔH CALCULATION UNIT

53j

ΔH

FF — 53k

FLIP DETERMINATION PROCESSING UNIT

53l

H — 53m

# FIG. 13

UPDATE $x_i/x_k$ | 0 | 1 | 2 | 3 | 4 | 5 | 6 | 7 | | | | | | | | | | 0 | 1 | 2 | 3 | 4 | 5 | 6 | 7

READ WEIGHT VALUES | 0 | 1 | 2 | 3 | 4 | 5 | 6 | 7 | 0ka | 0kb | 0kc | 1 | 2 | 3 | 4 | 5 | 6 | 7 | 0 | 1 | 2 | 3 | 4 | 5 | 6 | 7

UPDATE LOCAL FIELDS | 0 | 1 | 2 | 3 | 4 | 5 | 6 | 7 | 0ka | 0kb | 0kc | 1 | 2 | 3 | 4 | 5 | 6 | 7 | 0 | 1 | 2 | 3 | 4 | 5 | 6 | 7

READ LOCAL FIELDS | 0 | 1 | 2 | 3 | 4 | 5 | 6 | 7 | 0ka | 0kb | 0kc | 1 | 2 | 3 | 4 | 5 | 6 | 7 | 0 | 1 | 2 | 3 | 4 | 5 | 6 | 7

CALCULATION OF ΔH/FF | 0 | 1 | 2 | 3 | 4 | 5 | 6 | 7 | 0ka | 0kb | 0kc | 1 | 2 | 3 | 4 | 5 | 6 | 7 | 0 | 1 | 2 | 3 | 4 | 5 | 6 | 7

FLIP DETERMINATION /$h_k$ UPDATE DETECTION | 0 | 1 | 2 | 3 | 4 | 5 | 6 | 7 | 0ka | 0kb | 0kc | 1 | 2 | 3 | 4 | 5 | 6 | 7 | 0 | 1 | 2 | 3 | 4 | 5 | 6 | 7

CALCULATION OF H(x) | 0 | 1 | 2 | 3 | 4 | 5 | 6 | 7 | | | | | | | | | | 0 | 1 | 2 | 3 | 4 | 5 | 6 | 7

PROCESS EIGHT REPLICAS

t1  t2  t3  t4  t5  t6  t7  t8

TIME

EP 4 258 171 A1

# FIG. 14

# FIG. 15

$$x_i = 0: \quad \Delta g(h_k, W_{ki}\Delta x_i) = \begin{cases} 0 & for & h_k \le -W_{ki} \\ 1 & for & -W_{ki} < h_k < 0 \\ 0 & for & h_k \ge 0 \end{cases}$$

$$x_i = 1: \quad \Delta g(h_k, W_{ki}\Delta x_i) = \begin{cases} 0 & for & h_k \le 0 \\ 1 & for & 0 < h_k < W_{ki} \\ 0 & for & h_k \ge W_{ki} \end{cases}$$

# FIG. 16

$$x_i = 0: \quad \Delta g(h_k, W_{ki}\Delta x_i) = \begin{cases} 0 & for & h_k \leq -W_{ki} \\ h_k + W_{ki} & for & -W_{ki} < h_k < 0 \\ W_{ki} & for & h_k \geq 0 \end{cases}$$

$$x_i = 1: \quad \Delta g(h_k, W_{ki}\Delta x_i) = \begin{cases} 0 & for & h_k \leq 0 \\ h_k & for & 0 < h_k < W_{ki} \\ W_{ki} & for & h_k \geq W_{ki} \end{cases}$$

# FIG. 17

$h_k$ $+$ $\Sigma$ 61

$W_{ki}$ $\times$ 60

$\Delta x_i$

$\Delta g1$ GENERATION CIRCUIT 62

$-\mu_k$ 64 $\times$

$\Delta g2$ GENERATION CIRCUIT 63

$-\lambda_k$ 65 $\times$

$+$ $\Sigma$ 66

53fa

$h_k$

$\Delta x_i$

$h_k^{(old)}$

$\Delta g$ GENERATION CIRCUIT 53f1

$\Delta g$ GENERATION CIRCUIT 53f2

$+$ $\Sigma$ 53f3 $-$

$-\gamma_k$ $\times$ 53f4 $\delta h_i$

# FIG. 18

START

RECEIVE INPUT — S20

PERFORM INITIALIZATION PROCESSING — S21

PERFORM FLIP DETERMINATION PROCESSING — S22

PERFORM UPDATE PROCESSING — S23

IS IT T CHANGE TIMING? — S24 — NO

YES

$T \leftarrow d \times T$ — S25

$T < Tstop?$ — S26 — NO

YES

OUTPUT CALCULATION RESULT — S27

END

# FIG. 19

```
        ┌─────────────┐
        │    START    │
        └──────┬──────┘
               ▼
    ┌──────────────────────┐
    │  UPDATE h₁ TO h_N     │──── S30
    └──────────┬───────────┘
               ▼
    ┌──────────────────────┐
    │        s←1            │──── S31
    └──────────┬───────────┘
               ▼
    ┌──────────────────────┐
    │      k←k_s^(j)        │──── S32
    └──────────┬───────────┘
               ▼
    ┌──────────────────────┐
    │     UPDATE h_k        │──── S33
    └──────────┬───────────┘
               ▼
    ┌──────────────────────┐
    │     UPDATE h_i        │──── S34
    └──────────┬───────────┘
               ▼
          ◇ s<m(j)? ◇──── S35
               │
              NO
               ▼
        ┌─────────────┐
        │     END     │
        └─────────────┘
```

S36   s←s+1

YES

$\{k_1^{(j)}, k_2^{(j)}, \cdots, k_{m(j)}^{(j)}\}$:
ASCENDING LIST OF
IDENTIFICATION
NUMBER WHERE $W_{kj} \neq 0$

# FIG. 20

DATA PROCESSING APPARATUS 70

CPU 41

GPU 44 — 44a

RAM 42

INPUT INTERFACE 45 — 45a

HDD 43

MEDIUM READER 46 — 46a

ACCELERATOR CARD 71

FPGA 71a

DRAM 71b

COMMUNICATION INTERFACE 47 — NETWORK 47a

BUS

Europäisches
Patentamt

European
Patent Office

Office européen
des brevets

# EUROPEAN SEARCH REPORT

**Application Number**

EP 22 21 7114

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 757 908 A1 (FUJITSU LTD [JP]) 30 December 2020 (2020-12-30) * paragraphs [0002] – [0080]; figures 1-4,12 * | 1-12 | INV. G06N3/044 G06N5/01 |

-----

TECHNICAL FIELDS SEARCHED (IPC)

G06N

The present search report has been drawn up for all claims

| Place of search | Date of completion of the search | Examiner |
|---|---|---|
| The Hague | 31 August 2023 | Nourestani, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 7114

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2023

| Patent document cited in search report | Publication date | Patent family member(s) | Publication date |
|---|---|---|---|
| EP 3757908 A1 | 30-12-2020 | CN 112100799 A | 18-12-2020 |
| | | EP 3757908 A1 | 30-12-2020 |
| | | JP 7323777 B2 | 09-08-2023 |
| | | JP 2020204928 A | 24-12-2020 |
| | | US 2020401651 A1 | 24-12-2020 |

EPO FORM P0459

For more details about this annex : see Official Journal of the European Patent Office, No. 12/82

**REFERENCES CITED IN THE DESCRIPTION**

**Patent documents cited in the description**

- JP 2020201598 A
- JP 2020204928 A